# EUROPEAN PATENT APPLICATION

(11) **EP 4 836 492 A1**
(43) Date of publication of application: **04.11.2026**
(21) Application number: 24911037.0
(22) Date of filing: 23.12.2024
(51) Int. Cl.: H04W 24/02

(54) **METHOD AND APPARATUS FOR CONFIGURING DATA TRANSMISSION, DEVICE, AND STORAGE MEDIUM**

(30) Priority: 25.12.2023 CN 202311797324
(71) Applicant: Datang Mobile Communications Equipment Co., Ltd., Beijing 100085 (CN)
(72) Inventor: ZHANG, Huiying, Beijing 100085 (CN)
(74) Representative: Ipsilon
(86) International application number: PCT/CN2024/141472
(87) International publication number: WO 2025/140109

(57) **Abstract**

The present application relates to a method and apparatus for configuring data transmission, a device, and a storage medium. The method comprises: an access network device acquires a sensing result, the sensing result comprising mobility information of a target UE; and, on the basis of the sensing result, the access network device configures data transmission of the target UE.

## Description

### CROSS-REFERENCE

This application is cited from Chinese Patent Application No. 202311797324.8, entitled "Method and Apparatus for Configuring Data Transmission, Device, and Storage Medium", filed on December 25, 2023, which is incorporated herein by reference in its entirety.

### TECHNICAL FIELD

The present application relates to the field of wireless communication technologies, and in particular, to a method and apparatus for configuring data transmission, a device, and a storage medium.

### BACKGROUND

In practical applications, when a User Equipment (UE) is at the edge of a cell, problems such as performance degradation and a decrease in transmission rate may occur, which directly affects user experience. Therefore, mobile networks constantly strive to improve the transmission performance of the UE at the edge of the cell.

In a 5G communication system, an enhanced Multiple-Input Multiple-Output (MIMO) technology and a multi-Transmission Receive Point (TRP) cooperative transmission technology are introduced to further improve user capacity at the edge of the cell, and mobility enhancement technologies such as Conditional Handover (CHO) and a Dual Active Protocol Stack (DAPS) are introduced to improve the data transmission performance of the UE at the edge of the cell.

However, the current methods have the problem of deficient accuracy and timeliness in improving the transmission performance of the UE.

### SUMMARY

Embodiments of the present application provide a method and apparatus for configuring data transmission, a device, and a storage medium.

In a first aspect, a method for configuring data transmission is provided, and the method includes:
obtaining a sensing result by an access network device, the sensing result including mobility information of a target UE; and configuring, by the access network device, data transmission for the target UE according to the sensing result.

In some embodiments, configuring, by the access network device, the data transmission for the target UE according to the sensing result includes at least one of:
configuring a serving cell set for the target UE according to the sensing result by the access network device; configuring a serving TRP set for the target UE according to the sensing result by the access network device; or scheduling communication resources for the target UE according to the sensing result by the access network device.

In some embodiments, obtaining the sensing result by the access network device includes: receiving, by the access network device, the sensing result sent by a target device, the target device being provided with a communication and sensing module and/or a data module.

In some embodiments, the target device is the target UE; or, the target device is deployed in an access network; or, the target device is deployed in a core network.

In some embodiments, receiving, by the access network device, the sensing result sent by the target device includes at least one of: receiving, by the access network device, the sensing result sent by the target device when the sensing result is determined to meet a first condition; receiving, by the access network device, the sensing result periodically sent by the target device; or sending, by the access network device, a sensing result request message to the target device when a communication condition of the target UE is determined to meet a second condition, and receiving, by the access network device, a sensing result response message sent by the target device based on the sensing result request message, the sensing result response message carrying the sensing result.

In some embodiments, the first condition includes at least one of the following contents: the target UE enters a configuration region; the target UE leaves the configuration region; a moving distance of the target UE within the configuration region is greater than a first distance threshold; a distance between a current position of the target UE and a position of the target UE send last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In some embodiments, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

In some embodiments, the sensing result request message includes at least one of: a first UE identity of the target UE; an identity type of the first UE identity; a requested sensing result type list; or a requested sensing result response time range.

In some embodiments, the sensing result response message includes at least one of: a second UE identity of the target UE; an identity type of the second UE identity; the sensing result of the target UE corresponding to a sensing result type in the sensing result type list; or a timestamp.

In some embodiments, the first UE identity is a UE identity used in a communication system, or the first UE identity is a UE identity used in a sensing system. The second UE identity is a UE identity used in the communication system, or the second UE identity is a UE identity used in the sensing system.

In a second aspect, a method for configuring data transmission is provided, and the method includes: obtaining sensing data for a target UE by a target device, where the sensing data is obtained based on a sensing signal corresponding to the target UE, and the target device is provided with a communication and sensing module and/or a data module; and obtaining a sensing result according to the sensing data and sending the sensing result to an access network device by the target device, the sensing result including mobility information of the target UE.

In some embodiments, a sending end of the sensing signal is a base station and/or the target UE, and a receiving end of the sensing signal is a base station and/or the target UE.

In some embodiments, the sensing signal is a wireless signal configured for sensing; or, the sensing signal is a wireless signal configured for both sensing and communication.

In some embodiments, the sensing data is obtained by sensing the sensing signal and/or measuring the sensing signal.

In some embodiments, obtaining the sensing data for the target UE by the target device includes one of: obtaining the sensing data from one or more base stations by the target device; obtaining the sensing data from the target UE by the target device; or obtaining the sensing data from one or more base stations and the target UE by the target device.

In some embodiments, the target device is the target UE; or, the target device is deployed in an access network; or, the target device is deployed in a core network.

In some embodiments, sending the sensing result to the access network device includes at least one of: when the sensing result is determined to meet a first condition, sending the sensing result to the access network device by the target device; periodically sending the sensing result to the access network device by the target device; or after a sensing result request message sent by the access network device is received, sending a sensing result response message to the access network device by the target device, the sensing result response message carrying the sensing result, and the sensing result request message being sent by the access network device when a communication condition of the target UE is determined to meet a second condition.

In some embodiments, the first condition includes at least one of the following contents: the target UE enters a configuration region; the target UE leaves the configuration region; a moving distance of the target UE within the configuration region is greater than a first distance threshold; a distance between a current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In some embodiments, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; and a link abnormality occurs between the target UE and at least one cell serving the target UE, or a link abnormality occurs between the target UE and at least one TRP serving the target UE.

In some embodiments, the sensing result request message includes at least one of: a first UE identity of the target UE; an identity type of the first UE identity; a requested sensing result type list; or a requested sensing result response time range.

In some embodiments, the sensing result response message includes at least one of: a second UE identity of the target UE; an identity type of the second UE identity; the sensing result of the target UE corresponding to a sensing result type in the sensing result type list; or a timestamp.

In some embodiments, the first UE identity is a UE identity used in a communication system, or the first UE identity is a UE identity used in a sensing system. The second UE identity is a UE identity used in the communication system, or the second UE identity is a UE identity used in the sensing system.

In a third aspect, an apparatus for configuring data transmission used in an access network device is provided, and the apparatus includes:
an obtaining unit configured to obtain a sensing result, the sensing result including mobility information of a target UE; and a configuring unit configured to configure data transmission for the target UE according to the sensing result.

In some embodiments, the configuring unit is specifically configured to perform at least one of the following operations: configuring a serving cell set for the target UE according to the sensing result; configuring a serving TRP set for the target UE according to the sensing result; or scheduling communication resources for the target UE according to the sensing result.

In some embodiments, the obtaining unit is specifically configured to: receive the sensing result sent by a target device, the target device being provided with a communication and sensing module and/or a data module.

In some embodiments, the target device is the target UE; or, the target device is deployed in an access network; or, the target device is deployed in a core network.

In some embodiments, the obtaining unit is specifically configured to perform at least one of the following operations:
receiving the sensing result sent by the target device when the sensing result is determined to meet a first condition; receiving the sensing result periodically sent by the target device; or sending a sensing result request message to the target device when a communication condition of the target UE is determined to meet a second condition, and receiving a sensing result response message sent by the target device based on the sensing result request message, the sensing result response message carrying the sensing result.

In some embodiments, the first condition includes at least one of the following contents:
the target UE enters a configuration region; the target UE leaves the configuration region; a moving distance of the target UE within the configuration region is greater than a first distance threshold; a distance between a current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In some embodiments, the second condition includes at least one of the following contents:
a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

In some embodiments, the sensing result request message includes at least one of: a first UE identity of the target UE; an identity type of the first UE identity; a requested sensing result type list; or a requested sensing result response time range.

In some embodiments, the sensing result response message includes at least one of: a second UE identity of the target UE; an identity type of the second UE identity; the sensing result of the target UE corresponding to a sensing result type in the sensing result type list; or a timestamp.

In some embodiments, the first UE identity is a UE identity used in a communication system, or the first UE identity is a UE identity used in a sensing system. The second UE identity is a UE identity used in the communication system, or the second UE identity is a UE identity used in the sensing system.

In a fourth aspect, an apparatus for configuring data transmission used in a target device is provided, the target device being provided with a communication and sensing module and/or a data module, and the apparatus includes:
a first obtaining unit configured to obtain sensing data for a target UE, where the sensing data is obtained based on a sensing signal corresponding to the target UE; a second obtaining unit configured to obtain a sensing result according to the sensing data; and a sending unit configured to send the sensing result to an access network device, the sensing result including mobility information of the target UE.

In some embodiments, a sending end of the sensing signal is a base station and/or the target UE, and a receiving end of the sensing signal is a base station and/or the target UE.

In some embodiments, the sensing signal is a wireless signal configured for sensing; or, the sensing signal is a wireless signal configured for both sensing and communication.

In some embodiments, the sensing data is obtained by sensing the sensing signal and/or measuring the sensing signal.

In some embodiments, the first obtaining unit is specifically configured to perform one of the following operations: obtaining the sensing data from one or more base stations; obtaining the sensing data from the target UE; or obtaining the sensing data from one or more base stations and the target UE.

In some embodiments, the target device is the target UE; or, the target device is deployed in an access network; or, the target device is deployed in a core network.

In some embodiments, the sending module is specifically configured to perform at least one of the following operations: when the sensing result is determined to meet a first condition, sending the sensing result to the access network device; periodically sending the sensing result to the access network device; or after a sensing result request message sent by the access network device is received, sending a sensing result response message to the access network device, the sensing result response message carrying the sensing result, and the sensing result request message being sent by the access network device when a communication condition of the target UE is determined to meet a second condition.

In some embodiments, the first condition includes at least one of the following contents: the target UE enters a configuration region; the target UE leaves the configuration region; a moving distance of the target UE within the configuration region is greater than a first distance threshold; a distance between a current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In some embodiments, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

In some embodiments, the sensing result request message includes at least one of: a first UE identity of the target UE; an identity type of the first UE identity; a requested sensing result type list; or a requested sensing result response time range.

In some embodiments, the sensing result response message includes at least one of: a second UE identity of the target UE; an identity type of the second UE identity; the sensing result of the target UE corresponding to a sensing result type in the sensing result type list; or a timestamp.

In some embodiments, the first UE identity is a UE identity used in a communication system, or the first UE identity is a UE identity used in a sensing system. The second UE identity is a UE identity used in the communication system, or the second UE identity is a UE identity used in the sensing system.

In a fifth aspect, an access network device is provided, including a memory, a transceiver, and a processor:
the memory is configured for storing a computer program; the transceiver is configured for transmitting and receiving data under control of the processor; and the processor is configured for reading the computer program in the memory and performing the following operations:
obtaining a sensing result, the sensing result including mobility information of a target UE; and
configuring data transmission for the target UE according to the sensing result.

In some embodiments, the processor is specifically configured to perform at least one of the following operations:
configuring a serving cell set for the target UE according to the sensing result; configuring a serving TRP set for the target UE according to the sensing result; or scheduling communication resources for the target UE according to the sensing result.

In some embodiments, the processor is specifically configured to perform the following operation: controlling the transceiver to receive the sensing result sent by a target device, the target device being provided with a communication and sensing module and/or a data module.

In some embodiments, the target device is the target UE; or, the target device is deployed in an access network; or, the target device is deployed in a core network.

In some embodiments, the processor is specifically configured to perform at least one of the following operations: controlling the transceiver to receive the sensing result sent by the target device when the sensing result is determined to meet a first condition; controlling the transceiver to receive the sensing result periodically sent by the target device; or controlling the transceiver to send a sensing result request message to the target device when a communication condition of the target UE is determined to meet a second condition, and controlling the transceiver to receive a sensing result response message sent by the target device based on the sensing result request message, the sensing result response message carrying the sensing result.

In some embodiments, the first condition includes at least one of the following contents: the target UE enters a configuration region; the target UE leaves the configuration region; a moving distance of the target UE within the configuration region is greater than a first distance threshold; a distance between a current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In some embodiments, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

In some embodiments, the sensing result request message includes at least one of: a first UE identity of the target UE; an identity type of the first UE identity; a requested sensing result type list; or a requested sensing result response time range.

In some embodiments, the sensing result response message includes at least one of: a second UE identity of the target UE; an identity type of the second UE identity; the sensing result of the target UE corresponding to a sensing result type in the sensing result type list; or a timestamp.

In some embodiments, the first UE identity is a UE identity used in a communication system, or the first UE identity is a UE identity used in a sensing system. The second UE identity is a UE identity used in the communication system, or the second UE identity is a UE identity used in the sensing system.

In a sixth aspect, a target device is provided, the target device being provided with a communication and sensing module and/or a data module, and including a memory, a transceiver, and a processor:
the memory is configured for storing a computer program; the transceiver is configured for transmitting and receiving data under control of the processor; and the processor is configured for reading the computer program in the memory and performing the following operations:
obtaining sensing data for a target UE, where the sensing data is obtained based on a sensing signal corresponding to the target UE; and obtaining a sensing result according to the sensing data and controlling the transceiver to send the sensing result to an access network device, the sensing result including mobility information of the target UE.

In some embodiments, a sending end of the sensing signal is a base station and/or the target UE, and a receiving end of the sensing signal is a base station and/or the target UE.

In some embodiments, the sensing signal is a wireless signal configured for sensing; or, the sensing signal is a wireless signal configured for both sensing and communication.

In some embodiments, the sensing data is obtained by sensing the sensing signal and/or measuring the sensing signal.

In some embodiments, the processor is specifically configured to perform one of the following operations: obtaining the sensing data from one or more base stations; obtaining the sensing data from the target UE; or obtaining the sensing data from one or more base stations and the target UE.

In some embodiments, the target device is the target UE; or, the target device is deployed in an access network; or, the target device is deployed in a core network.

In some embodiments, the processor is specifically configured to perform at least one of the following operations: when the sensing result is determined to meet a first condition, controlling the transceiver to send the sensing result to the access network device; controlling the transceiver to periodically send the sensing result to the access network device; or after a sensing result request message sent by the access network device is received, controlling the transceiver to send a sensing result response message to the access network device, the sensing result response message carrying the sensing result, and the sensing result request message being sent by the access network device when a communication condition of the target UE is determined to meet a second condition.

In some embodiments, the first condition includes at least one of the following contents: the target UE enters a configuration region; the target UE leaves the configuration region; a moving distance of the target UE within the configuration region is greater than a first distance threshold; a distance between a current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In some embodiments, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

In some embodiments, the sensing result request message includes at least one of: a first UE identity of the target UE; an identity type of the first UE identity; a requested sensing result type list; or a requested sensing result response time range.

In some embodiments, the sensing result response message includes at least one of: a second UE identity of the target UE; an identity type of the second UE identity; the sensing result of the target UE corresponding to a sensing result type in the sensing result type list; or a timestamp.

In some embodiments, the first UE identity is a UE identity used in a communication system, or the first UE identity is a UE identity used in a sensing system. The second UE identity is a UE identity used in the communication system, or the second UE identity is a UE identity used in the sensing system.

In a seventh aspect, there is provided a processor-readable storage medium storing a program for causing a processor to perform the method of any description of the first aspect.

In an eighth aspect, there is provided a processor-readable storage medium storing a program for causing a processor to perform the method of any description of the second aspect.

Details of one or more embodiments of the present application are set forth in the accompanying drawings and the description below. Other features, objects, and advantages of the present application will be apparent from the description, the accompanying drawings, and the claims.

### BRIEF DESCRIPTION OF THE DRAWINGS

Various other advantages and benefits will become clear to those skilled in the art by reading through the following detailed description of embodiments. The accompanying drawings are only intended to illustrate the embodiments and not construed as limiting the present application. In all the drawings, the same reference numerals denote the same components. In the drawings:
FIG. 1 is an application environment diagram of a method for configuring data transmission according to an embodiment;
FIG. 2 is a schematic structural diagram of a base station according to an embodiment;
FIG. 3 is a schematic flowchart of a method for configuring data transmission according to an embodiment;
FIG. 4 is a schematic flowchart of another method for configuring data transmission according to an embodiment;
FIG. 5 is a schematic flowchart of another method for configuring data transmission according to an embodiment;
FIG. 6 is a schematic flowchart of another method for configuring data transmission according to an embodiment;
FIG. 7 is a schematic flowchart of another method for configuring data transmission according to an embodiment;
FIG. 8 is a structural block diagram of an apparatus for configuring data transmission according to an embodiment;
FIG. 9 is a structural block diagram of another apparatus for configuring data transmission according to an embodiment;
FIG. 10 is an internal structure diagram of an access network device according to an embodiment; and
FIG. 11 is an internal structure diagram of a target device according to an embodiment.

### DETAILED DESCRIPTION

In order to make the objects, technical solutions, and advantages of the present application more clear, the present application will be described in further detail below with reference to the accompanying drawings and embodiments. It should be understood that the specific embodiments described herein are only for explaining the present application, and not intended to limit the present application.

In practical applications, when a User Equipment (UE) is at the edge of a cell, problems such as performance degradation and a decrease in transmission rate may occur, which directly affects user experience. Therefore, mobile networks constantly strive to improve the transmission performance of the UE at the edge of the cell.

In a 5G communication system, an enhanced Multiple-Input Multiple-Output (MIMO) technology and a multi-Transmission Receive Point (TRP) cooperative transmission technology are introduced to further improve user capacity at the edge of the cell, and mobility enhancement technologies such as Conditional Handover (CHO) and a Dual Active Protocol Stack (DAPS) are introduced to improve the data transmission performance of the UE at the edge of the cell.

However, in the above technologies, the UE is evaluated by measuring communication signals through the UE or a base station, so as to configure data transmission of the UE to improve the transmission performance of the UE, but timeliness and accuracy thereof are deficient.

In view of this, embodiments of the present application provide a method and apparatus for configuring data transmission, a device, and a storage medium. In the method for configuring data transmission, an access network device obtains a sensing result, the sensing result including mobility information of a target UE, and then, the access network device configures data transmission for the target UE based on the sensing result, where the sensing result is obtained based on a wireless sensing technology. The wireless sensing technology is a technology for obtaining environmental feature information and/or feature information of objects in an environment by using sensing signals, and has better timeliness and accuracy than the traditional methods in which the UE is evaluated by measuring the communication signal, and therefore, by configuring the data transmission of the UE based on the sensing result of the UE, the transmission performance of the UE can be improved more accurately and more timely.

It should be noted that the beneficial effect or the technical problem to be solved by the embodiments of the present application is not limited thereto, and may be other implicit or associated beneficial effects or problems, and reference may be made to the descriptions of the following embodiments for details.

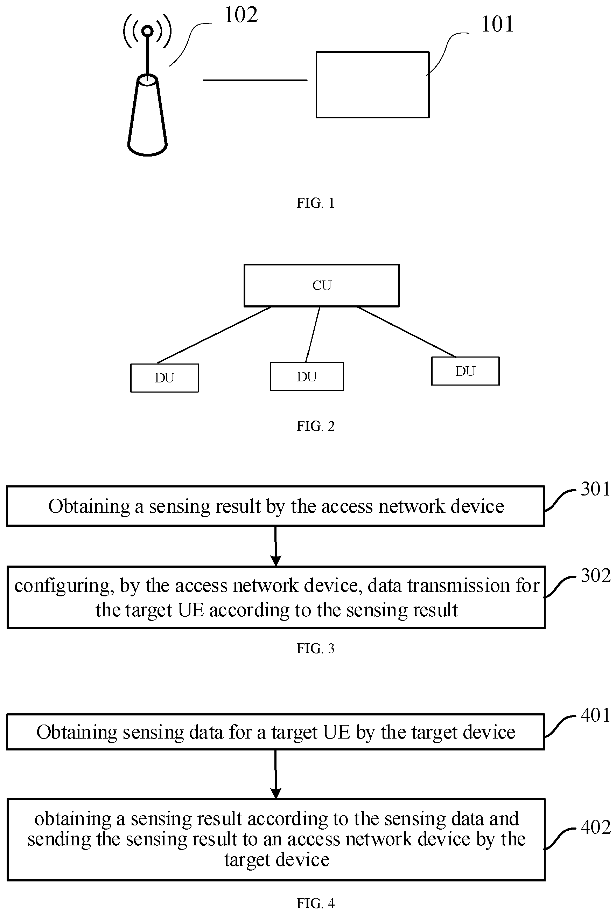

FIG. 1 shows a schematic diagram of an application environment involved by a method for configuring data transmission according to an embodiment of the present application. As shown in FIG. 1, the application environment includes a target device 101 and an access network device 102. In an optional embodiment of the present application, the target device 101 and the access network device 102 may interact via a direct interface, or the target device 101 and the access network device 102 may interact via a service interface. Herein, the direct interface refers to an interface having an interface definition at each protocol layer, and the service interface refers to an interface having an interface definition only at higher protocol layers.

Herein, the target device 101 is provided with a communication and sensing module and/or a data module. Both the communication and sensing module and the data module are functional modules. The communication and sensing module has the functions of obtaining sensing data and obtaining sensing results by performing analysis and calculation according to the sensing data. The communication and sensing module is realized by a communication and sensing software program. In a future communication system, the data module realizes data plane management and can store various data. The data module is realized by a data plane management program, and the communication and sensing module provides input for the data module, that is, the communication and sensing module provides the sensing results to the data module for uniform processing by the data module.

The target device 101 may be a UE. The target device 101 may also be deployed in an access network or a core network, and in the case that the target device 101 is deployed in the access network, specifically, the target device 101 is deployed in a base station. In some embodiments, the target device 101 is deployed in a Centralized Unit (CU) in the base station. In the case that the target device 101 is deployed in the core network, specifically, the target device 101 is a sensing function (SF) in the core network. The sensing function achieves basic functions related to sensing, such as sensing control, sensing data processing and sensing authorization. The sensing function may be an independent network function, and may also be combined with other network functions to form one network function. For example, the other network functions are a Location Management Function (LMF), an Access and Mobility Management Function (AMF), or the like. The access network device 102 may be the base station, a part of the base station (e.g., the CU), or a device deployed in the access network and can communicate with the base station, which is not specifically limited in the embodiment of the present application.

FIG. 2 shows an optional architecture diagram of a base station, and as shown in FIG. 2, the base station includes a CU and a Distributed Unit (DU). The CU is responsible for processing high layer protocols such as Radio Resource Control (RRC), a Service Data Adaptation Protocol (SDAP) or a Packet Data Convergence Protocol (PDCP). The DU is responsible for processing low layer protocols such as Radio Link Control (RLC), Media Access Control (MAC), and a physical layer protocol. The DU realizes air interface transmission with the UE through the TRP.

The technical solution of the present application and a way to solve the above technical problem by the technical solution of the present application are described in detail below by specific embodiments. The following several specific embodiments may be combined with each other, and same or similar concepts or processes may not be repeated in some embodiments. The embodiments of the present application will be described below with reference to the accompanying drawings.

In an embodiment, as shown in FIG. 3, a method for configuring data transmission is provided, the description is given with the method applied to the access network device in FIG. 1 as an example, and the method includes the following steps.

Step 301: obtaining a sensing result by the access network device.

In an optional embodiment of the present application, the sensing result is obtained based on a wireless sensing technology. The wireless sensing technology relies on analysis of transmission, reflection and scattering of sensing signals, and is a technology for obtaining environmental feature information and/or feature information of objects in an environment by using the sensing signals. The feature information of the objects in the environment includes, for example, a shape, a size, a direction, a speed, a position, a distance or relative movement between the objects, or the like.

In a future communication system, communication and sensing fusion (which may also be referred to as integrated sensing and communication) design may be introduced based on the wireless sensing technology, which means that unified design of communication and sensing functions is realized by means of joint design of air interface and protocol joint design, reuse of time-frequency-space resources, hardware device sharing, or the like, so that a wireless network achieves the sensing function while performing communication interaction, thereby improving an overall performance and a service capability of the network.

The communication and sensing fusion design provides the possibility of enhancing the use of telecommunication infrastructures in the fields of object detection and tracking, environmental monitoring, human motion monitoring, or the like, and provides input for various vertical fields (including unmanned aerial vehicles, smart homes, vehicle to everything (V2X), and factories). Specific use examples include: 1. detection of objects and intruders of predefined safe regions around smart homes, highways, railways, factories, and critical infrastructures; 2. collision avoidance and trajectory tracking of unmanned aerial vehicles, vehicles, and automatic guided vehicles; 3. automatic operation and navigation; 4. public safety search and rescue; 5. rainfall and flooding monitoring; and 5. health and exercise monitoring.

In an optional embodiment of the present application, the sensing result for the target UE is obtained by using the wireless sensing technology based on the communication and sensing fusion design introduced in the communication system, and the sensing result includes the mobility information of the target UE.

In an optional embodiment of the present application, the sensing result includes, in addition to the mobility information of the target UE, object information within a preset range around the target UE. For example, the object information is object size information, object type information, object shape information, or the like, which is not specifically limited in the embodiment of the present application.

In an optional embodiment of the present application, the sensing result includes at least one of: absolute position information of the target UE, relative position information of the target UE, moving speed information of the target UE, moving direction information of the target UE, moving track information of the target UE, moving track prediction information of the target UE, or object information within a preset range around the target UE.

In some optional embodiments, the absolute position information of the target UE is satellite positioning information of the target UE, for example, including longitude and latitude, am altitude, or the like, of the target UE. In an optional embodiment of the present application, the absolute position information of the target UE further includes positioning precision information of the target UE.

In some optional embodiments, the relative position information of the target UE is, for example, a relative position between a current position of the target UE and a last sensed position of the target UE, or a relative position between the target UE and the access network device, or a relative position between the target UE and a certain specific TRP, or a relative position between the target UE and a specific building, or a relative position between the target UE and a specific object, or a relative position between the target UE and another UE.

In some optional embodiments, the moving speed information of the target UE includes, for example, a speed of the target UE, a speed range of the target UE, an acceleration of the target UE, or the like. In an optional embodiment of the present application, the moving speed information of the target UE further includes speed measurement accuracy information.

In some optional embodiments, the moving direction information of the target UE is an absolute moving direction of the target UE, or a direction range of the absolute moving direction of the target UE, or a relative moving direction of the target UE, or a direction range of the relative moving direction of the target UE. In an optional embodiment of the present application, the relative moving direction of the target UE refers to an offset between a current moving direction of the target UE and a last sensed moving direction of the target UE.

In some optional embodiments, the moving track information of the target UE includes a moving track of the target UE in a time period between the previous sensing and the current sensing, or includes a moving track of the target UE in a certain preset time period.

In some optional embodiments, the moving track prediction information of the target UE includes a predicted moving track of the target UE in a future time period. In an optional embodiment of the present application, the moving track of the target UE is predicted based on a historical moving track of the target UE, so as to obtain the moving track of the target UE in the future time period.

Step 302: configuring, by the access network device, data transmission for the target UE according to the sensing result.

In an optional embodiment of the present application, the access network device configures the data transmission for the target UE by configuring at least one of a DU, a TRP, an MAC entity in a base station, or the target UE.

In this embodiment, the access network device obtains the sensing result, herein, the sensing result includes the mobility information of the target UE. Then, the access network device configures the data transmission for the target UE, herein, the sensing result is obtained based on the wireless sensing technology. The wireless sensing technology is a technology for obtaining the environmental feature information and/or the feature information of the objects in the environment by using the sensing signals, and has better timeliness and accuracy than traditional methods in which a UE is evaluated by measuring communication signals. Therefore, by configuring the data transmission for the UE based on the sensing result of the UE, a transmission performance of the UE can be improved more accurately and more timely.

In an optional embodiment of the present application, configuring, by the access network device, the data transmission for the target UE according to the sensing result includes at least one of: A. configuring a serving cell set for the target UE according to the sensing result by the access network device; B. configuring a serving TRP set for the target UE according to the sensing result by the access network device; or C. scheduling communication resources for the target UE according to the sensing result by the access network device.

In some embodiments, configuring the serving cell set for the target UE according to the sensing result by the access network device may include at least one of: configuring, by the access network device, a new serving cell for the target UE according to the sensing result on the basis of a cell set originally serving the target UE, deleting, by the access network device, one or more cells serving the target UE according to the sensing result on the basis of the cell set originally serving the target UE, or modifying, by the access network device, configurations of one or more cells in the cell set originally serving the target UE according to the sensing result.

In some embodiments, configuring the serving cell set for the target UE according to the sensing result by the access network device includes: respectively configuring serving cells for different Data Radio Bearers (DRBs) of the target UE according to the sensing result by the access network device.

In some embodiments, configuring the serving cell set for the target UE according to the sensing result by the access network device includes: sending, by the access network device, a configuration of the target UE to a DU corresponding to each cell in the serving cell set configured for the target UE and sending, by the access network device, a configuration of the cell set serving the target UE to the target UE.

In some embodiments, configuring the serving TRP set for the target UE according to the sensing result by the access network device includes: configuring, by the access network device, a new serving TRP for the target UE according to the sensing result on the basis of a TRP set originally serving the target UE, deleting, by the access network device, one or more TRPs serving the target UE according to the sensing result on the basis of the TRP set originally serving the target UE, and modifying, by the access network device, configurations of one or more TRPs in the TRP set originally serving the target UE according to the sensing result.

In some embodiments, configuring the serving TRP set for the target UE according to the sensing result by the access network device includes: respectively configuring serving TRPs for different DRBs of the target UE according to the sensing result by the access network device.

In some embodiments, configuring the serving TRP set for the target UE according to the sensing result by the access network device includes: sending, by the access network device, the configuration of the target UE to each TRP in the serving TRP set configured for the target UE and sending, by the access network device, a configuration of the TRP set serving the target UE to the target UE.

In some embodiments, scheduling the communication resources for the target UE according to the sensing result by the access network device includes: scheduling the communication resources of cells in a first cell set for the target UE according to the sensing result by the access network device. In some embodiments, the first cell set is the serving cell set configured for the target UE by the access network device according to the sensing result. For example, the access network device configures cell A and cell B to serve the target UE according to the sensing result, that is, the first cell set includes the cell A and the cell B, and then, the access network device schedules communication resources of the cell A and/or the cell B according to the sensing result.

In some embodiments, scheduling the communication resources for the target UE according to the sensing result by the access network device includes: scheduling, by the access network device, the communication resources for the target UE according to the sensing result in combination with a communication load condition of each cell in the first cell set. For example, the first cell set includes cell A, cell B, and cell C, herein, it is determined according to the sensing result that a distance between the target UE and each of the cell A and the cell B is smaller than a distance between the target UE and the cell C, and if a communication load of the cell A is greater than a communication load of the cell B, communication resources of the cell B are preferentially scheduled for the target UE.

In some embodiments, scheduling the communication resources for the target UE according to the sensing result by the access network device includes: scheduling the communication resources of cells in a second cell set for the target UE according to the sensing result by the access network device. In some embodiments, the second cell set is the cell set originally serving the target UE.

In some embodiments, scheduling the communication resources for the target UE according to the sensing result by the access network device includes: scheduling, by the access network device, the communication resources for the target UE according to the sensing result in combination with a communication load condition of each cell in the second cell set.

In some embodiments, scheduling the communication resources for the target UE according to the sensing result by the access network device includes: scheduling the communication resources for the target UE by the access network device through an MAC entity. In an optional embodiment of the present application, each DU corresponds to one MAC entity, or a plurality of DUs collectively correspond to one MAC entity, and then, the access network device schedules the communication resources for the target UE through the MAC entity. For example, the first cell set includes cell A and cell B, the cell A corresponds to DU1, the DU1 corresponds to MAC entity 1, the cell B corresponds to DU2, the DU2 corresponds to MAC entity 2, and then, the access network device schedules the communication resources of the cell A and the cell B for the target UE through the MAC entity 1 and the MAC entity 2.

In an optional embodiment of the present application, the access network device receives the sensing result sent by a target device.

As described above, the target device is provided with the communication and sensing module and/or the data module, the communication and sensing module sends the sensing result to the access network device, the data module also sends the sensing result to the access network device. The target device is the target UE. Alternatively, the target device is deployed in an access network. Alternatively, the target device is deployed in a core network.

In an optional embodiment of the present application, receiving, by the access network device, the sensing result sent by the target device includes at least one of: A. receiving, by the access network device, the sensing result sent by the target device when the sensing result is determined to meet a first condition; B. receiving, by the access network device, the sensing result periodically sent by the target device; or C. sending, by the access network device, a sensing result request message to the target device when a communication condition of the target UE is determined to meet a second condition, and receiving, by the access network device, a sensing result response message sent by the target device based on the sensing result request message, the sensing result response message carrying the sensing result.

In an optional embodiment of the present application, the first condition includes at least one of the following contents: the target UE enters a configuration region; the target UE leaves the configuration region; a moving distance of the target UE within the configuration region is greater than a first distance threshold; a distance between the current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

The configuration region is a region determined according to network coverage, such as a region covered by a plurality of TRPs in an overlapped manner, a highway, or an intersection. The configuration region is also a preset special region such as an industrial park, a port, an office building, or a stadium.

In practical applications, the contents that the target UE enters the configuration region, the target UE leaves the configuration region, and the moving distance of the target UE within the configuration region is greater than the first distance threshold may indicate that the target UE possibly already enters or is about to enter an edge region of a cell. In this case, the target device actively sends the sensing result to the access network device, and the access network device configures the data transmission for the target UE according to the sensing result, thereby improving the transmission performance of the target UE.

The content that the distance between the current position of the target UE and the position of the target UE sensed last time is larger than the second distance threshold indicates that the target UE moves by a large distance in a time period between two times of sensing, and therefore, the target UE possibly moves to the edge region of the cell. In this case, the target device actively sends the sensing result to the access network device, and the access network device configures the data transmission for the target UE according to the sensing result, thereby improving the transmission performance of the target UE.

The content that the moving direction variation of the target UE is larger than the direction change threshold or the moving track of the target UE deviates from the predicted moving track indicates that the moving direction of the target UE is changed greatly, for example, the target UE is located on a vehicle, the vehicle turns, and in this case, the target UE possibly moves to the edge region of the cell. In this case, the target device actively sends the sensing result to the access network device, and the access network device configures the data transmission for the target UE according to the sensing result, thereby improving the transmission performance of the target UE.

The content that the moving speed variation of the target UE is larger than the speed change threshold indicates that the moving speed of the target UE is changed greatly, for example, the target UE is held by a walking user previously, and then, the user holding the target UE enters a vehicle to drive the vehicle, and in this case, the target UE possibly moves to the edge region of the cell. In this case, the target device actively sends the sensing result to the access network device, and the access network device configures the data transmission for the target UE according to the sensing result, thereby improving the transmission performance of the target UE.

When the object of the target type is found within the preset range around the target UE, the target type being a type of an object with a size greater than a preset size, such as a high rise or a big tree, the object of the target type is likely to have a serious influence on a quality of a communication signal in a specific direction, and in this case, it is necessary to change the serving cell or the serving TRP. In this case, the target device actively sends the sensing result to the access network device, and the access network device configures the data transmission of the target UE according to the sensing result, thereby improving the transmission performance of the target UE.

In an optional embodiment of the present application, the target type is also a non-serving TRP type (i.e., a TRP not serving the target UE). When the object of the target type appears within the preset range around the target UE, the target UE already enters or is about to enter a coverage range of the non-serving TRP, and in this case, it is necessary to change the serving cell or the serving TRP. In this case, the target device actively sends the sensing result to the access network device, and the access network device configures the data transmission for the target UE according to the sensing result, thereby improving the transmission performance of the target UE.

When the specific object such as the high rise, the big tree, or the TRP serving the target UE moves out of the preset range around the target UE, it is necessary to change the serving cell or the serving TRP. In this case, the target device actively sends the sensing result to the access network device, and the access network device configures the data transmission for the target UE according to the sensing result, thereby improving the transmission performance of the target UE.

In an optional embodiment of the present application, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

The conditions that the signal quality of any serving cell reported by the target UE is lower than the first signal quality threshold, at least one cell serving the target UE determines that the uplink signal quality of the target UE is lower than the fourth signal quality threshold, and at least one TRP serving the target UE determines that the uplink signal quality of the target UE is lower than the fourth signal quality threshold indicate that the target UE moves away from the serving cell or the serving TRP, and possibly enters the edge region of the cell. In this case, the access network device actively requests the sensing result from the target device, so as to configure the data transmission for the target UE according to the sensing result, thereby improving the transmission performance of the target UE.

The conditions that the signal quality of any serving cell reported by the target UE is higher than the second signal quality threshold, at least one cell serving the target UE determines that the uplink signal quality of the target UE is higher than the fifth signal quality threshold, and at least one TRP serving the target UE determines that the uplink signal quality of the target UE is higher than the fifth signal quality threshold indicate that the target UE moves towards the serving cell or the serving TRP, and possibly enters the edge region of the cell. In this case, the access network device actively requests the sensing result from the target device, so as to configure the data transmission for the target UE according to the sensing result, thereby improving the transmission performance of the target UE.

The condition that the signal quality of the non-serving cell reported by the target UE is higher than the third signal quality threshold indicates that the target UE moves towards the non-serving cell, and possibly enters the edge region of the cell. In this case, the access network device actively requests the sensing result from the target device, so as to configure the data transmission for the target UE according to the sensing result, thereby improving the transmission performance of the target UE.

The condition that the signal quality of the non-serving cell reported by the target UE is higher than that of the serving cell reported by the target UE means that the signal quality of a certain non-serving cell reported by the target UE is higher than that of a certain serving cell reported by the target UE, or the signal quality of a certain non-serving cell reported by the target UE is higher than that of each serving cell reported by the target UE.

The condition that the signal quality of the non-serving cell reported by the target UE is higher than that of the serving cell reported by the target UE, and the difference therebetween is greater than the signal quality difference threshold indicates that the target UE moves away from the serving cell, gets close to the non-serving cell, and possibly enters the edge region of the cell. In this case, the access network device actively requests the sensing result from the target device, so as to configure the data transmission for the target UE according to the sensing result, thereby improving the transmission performance of the target UE.

The condition that the link abnormality occurs between the target UE and at least one cell serving the target UE includes: in the case where a plurality of cells serve the target UE, the link abnormality occurs between one of the cells serving the target UE and the target UE, or the link abnormality occurs between each of the plurality of cells serving the target UE and the target UE, which indicates that the original serving cell (the original serving cell and the target UE have the link abnormality) cannot continuously provide service for the UE, and in this case, the serving cell needs to be reconfigured for the target UE. In this case, the access network device actively requests the sensing result from the target device, so as to configure the data transmission for the target UE according to the sensing result, thereby improving the transmission performance of the target UE.

In an optional embodiment of the present application, when the link abnormality occurs, the target UE reports link abnormality information to the access network device, or the cell reports the link abnormality information to the access network device, or the target UE and the cell report the link abnormality information to the access network device together, so that the access network device determines that the link abnormality occurs between the target UE and the cell serving the target UE.

The condition that the link abnormality occurs between the target UE and at least one TRP serving the target UE includes: in the case where a plurality of TRPs serve the target UE, the link abnormality occurs between one of the TRPs serving the target UE and the target UE, or the link abnormality occurs between each of the plurality of TRPs serving the target UE and the target UE, which indicates that the original serving TRP (the original serving TRP and the target UE have the link abnormality) cannot continuously provide service for the UE, and in this case, the serving TRP needs to be reconfigured for the target UE. In this case, the access network device actively requests the sensing result from the target device, so as to configure the data transmission for the target UE according to the sensing result, thereby improving the transmission performance of the target UE.

In an optional embodiment of the present application, when the link abnormality occurs, the target UE reports link abnormality information to the access network device, or the TRP reports the link abnormality information to the access network device, or the target UE and the TRP report the link abnormality information to the access network device together, so that the access network device determines that the link abnormality occurs between the target UE and the TRP serving the target UE.

In an optional embodiment of the present application, the sensing result request message includes at least one of: a first UE identity of the target UE; an identity type of the first UE identity; a requested sensing result type list; or a requested sensing result response time range.

In an optional embodiment of the present application, the first UE identity is a UE identity used in a communication system, or the first UE identity is a UE identity used in a sensing system. When the first UE identity is the UE identity used in the communication system, an identity type of the first UE identity indicates that the first UE identity is the UE identity used in the communication system, and similarly, when the first UE identity is the UE identity used in the sensing system, the identity type of the first UE identity indicates that the first UE identity is the UE identity used in the sensing system.

The UE identity used in the communication system is, for example, a Radio Network Temporary Identifier (RNTI), a Temporary Mobile Subscriber Identity (TMSI), a Short Term Mobile Subscriber Identity (S-TMSI), a Globally Unique Temporary Identifier (GUTI), an International Mobile Subscriber Identity (IMSI), or the like.

The UE identity used in the sensing system is, for example, a Radio Frequency Identification (RFID), a Decentralized Identifier (DID), an Object Identifier (OID), an Industrial Internet Identifier (IIID), a Global Standard 1 (GS1), Handle, Ecode, a Near Field Communication (NFC) identity, a User Identification (UID), a one-dimensional code, a two-dimensional code, or the like.

The requested sensing result type list refers to a list of requested sensing result types among all sensing result types possibly provided by the target device.

In an optional embodiment of the present application, the sensing result response message includes at least one of: a second UE identity of the target UE; an identity type of the second UE identity; the sensing result of the target UE corresponding to a sensing result type in the sensing result type list; or a timestamp.

In an optional embodiment of the present application, the identity type of the first UE identity is the same as or different from the identity type of the second UE identity. In an optional embodiment of the present application, the second UE identity is a UE identity used in the communication system, or the second UE identity is a UE identity used in the sensing system. Similarly, when the second UE identity is the UE identity used in the communication system, the identity type of the second UE identity indicates that the second UE identity is the UE identity used in the communication system, and when the second UE identity is the UE identity used in the sensing system, the identity type of the second UE identity indicates that the second UE identity is the UE identity used in the sensing system.

The timestamp in the sensing result response message is a timestamp corresponding to a recording time of the sensing result. The timestamp indicates an absolute time and is also a timestamp based on System Frame Number (SFN) and time slots.

In an optional embodiment of the present application, if the identity type of the first UE identity is different from the identity type of the second UE identity, for example, the identity type of the first UE identity is the UE identity used in the communication system and the identity type of the second UE identity is the UE identity used in the sensing system, or the identity type of the first UE identity is the UE identity used in the sensing system and the identity type of the second UE identity is the UE identity used in the communication system, the access network device maps the second UE identity according to an identity corresponding relationship between UE identities in the communication system and UE identities in the sensing system, so as to cause a UE identity obtained after mapping to have a same type as the first UE identity, thereby associating the sensing result in the sensing result response message with the target UE.

For example, if the identity type of the first UE identity is the UE identity used in the communication system, and the identity type of the second UE identity is the UE identity used in the sensing system, the access network device maps the second UE identity according to the identity corresponding relationship, so as to cause the UE identity obtained after mapping to be the UE identity used in the communication system. For another example, if the identity type of the first UE identity is the UE identity used in the sensing system, and the identity type of the second UE identity is the UE identity used in the communication system, the access network device maps the second UE identity according to the identity corresponding relationship, so as to cause the UE identity obtained after mapping to be the UE identity used in the sensing system.

The embodiment of the present application provides a plurality of manners for obtaining the identity corresponding relationship, and the access network device obtains the identity corresponding relationship based on one or more of the manners.
A. The access network device obtains the identity corresponding relationship from an identity analysis module. The identity analysis module is deployed in the access network device, for example, the identity analysis module is preconfigured in the access network device.
B. The access network device obtains the identity corresponding relationship from an identity analysis service platform. The identity analysis service platform is a cloud platform, and the access network device obtains the identity corresponding relationship from the cloud platform.
C. The access network device obtains identity analysis information from an application server corresponding to the UE identity type and obtains the identity corresponding relationship according to the identity analysis information. The application server is deployed in a trusted domain of the core network, and alternatively, the application server is deployed in a wide area network.
D. The access network device obtains the UE identities in the communication system and the UE identities in the sensing system from UEs, and establishes the identity corresponding relationship according to the identities obtained from the UEs. For example, each UE maintains its own UE identity in the communication system and UE identity in the sensing system, and the access network device collects the UE identity of each UE in the communication system and the UE identity in the sensing system from each UE, thereby establishing the identity corresponding relationship.

In an embodiment, as shown in FIG. 4, a method for configuring data transmission is provided, the description is given with the method applied to the target device in FIG. 1 as an example. Specifically, the method is applied to a communication and sensing module and/or a data module deployed in the target device, and includes the following steps.

Step 401: obtaining sensing data for a target UE by the target device.

The sensing data is obtained based on a sensing signal corresponding to the target UE. The sensing signal refers to a wireless signal for sensing, and the sensing signal corresponding to the target UE refers to a wireless signal for sensing the target UE.

Step 402: obtaining a sensing result according to the sensing data and sending the sensing result to an access network device by the target device, the sensing result including mobility information of the target UE.

In an optional embodiment of the present application, the target device performs analysis and calculation according to the sensing data, so as to obtain the sensing result of the target UE.

In this embodiment, the target device obtains the sensing data for the target UE, obtains the sensing result according to the sensing data, and then sends the sensing result to the access network device, so that the access network device configures data transmission for the target UE according to the sensing result. Since the sensing result is obtained based on a wireless sensing technology, and the wireless sensing technology is a technology for obtaining environmental feature information and/or feature information of objects in an environment by using sensing signals, and has better timeliness and accuracy than traditional methods in which a UE is estimated by measuring a communication signal, by sending the sensing result to the access network device to cause the access network device to configure the data transmission for the UE based on the sensing result, a transmission performance of the UE is improved more accurately and more timely.

In an optional embodiment of the present application, the sensing signal is a wireless signal dedicated to sensing. Alternatively, the sensing signal is a wireless signal used for both sensing and communication.

In an optional embodiment of the present application, a sending end of the sensing signal is a base station and/or the target UE, and a receiving end of the sensing signal is a base station and/or the target UE.

For example, the sending end of the sensing signal is the target UE, the sensing signal is transmitted by reflection, scattering, or the like, and then received by the target UE, and in this case, the receiving end of the sensing signal is also the target UE. For another example, the sending end of the sensing signal is the target UE, the sensing signal is transmitted by reflection, scattering, or the like, and then received by a plurality of base stations, and in this case, the receiving end of the sensing signal is the plurality of base stations. For another example, the sending end of the sensing signal is the base station, the sensing signal is transmitted by reflection, scattering, or the like, and then received by the target UE, and in this case, the receiving end of the sensing signal is the target UE.

In an optional embodiment of the present application, the receiving end of the sensing signal obtains the sensing data based on the sensing signal. For example, the receiving end of the sensing signal senses and/or measures the sensing signal, so as to obtain the sensing data.

The measurement of the sensing signal includes, for example, measurement of a strength, a signal quality, or the like, of the sensing signal, and the sensing of the sensing signal includes, for example, determination of a distance of an object reflecting the sensing signal according to a transmission duration of the sensing signal, determination of an orientation of the object reflecting the sensing signal according to a receiving angle of the sensing signal, or the like, which is not particularly limited in the embodiment of the present application.

In an optional embodiment of the present application, since the sensing data is obtained by the receiving end of the sensing signal, the target device obtains the sensing data from the receiving end of the sensing signal. Depending on the receiving end of the sensing signal, a manner of obtaining the sensing data by the target device includes one of the following manners: A. the target device obtains the sensing data from one or more base stations; B. the target device obtains the sensing data from the target UE; or C. the target device obtains the sensing data from one or more base stations and the target UE.

It should be noted that, in practical applications, after the receiving end of the sensing signal obtains the sensing data, the receiving end actively sends the sensing data to the target device, and the target device also requests the sensing data from the receiving end of the sensing signal, which is not particularly limited in the embodiment of the present application.

In an optional embodiment of the present application, sending the sensing result to the access network device by the target device includes at least one of: A. when the sensing result is determined to meet a first condition, sending the sensing result to the access network device by the target device; B. periodically sending the sensing result to the access network device by the target device; or, C. after a sensing result request message sent by the access network device is received, sending a sensing result response message to the access network device by the target device, the sensing result response message carrying the sensing result, and the sensing result request message being sent by the access network device when a communication condition of the target UE is determined to meet a second condition.

In an optional embodiment of the present application, the first condition includes at least one of the following contents: the target UE enters a configuration region; the target UE leaves the configuration region; a moving distance of the target UE within the configuration region is greater than a first distance threshold; a distance between a current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In an optional embodiment of the present application, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

In an optional embodiment of the present application, the sensing result request message includes at least one of: a first UE identity of the target UE; an identity type of the first UE identity; a requested sensing result type list; or a requested sensing result response time range.

In an optional embodiment of the present application, the sensing result response message includes at least one of: a second UE identity of the target UE; an identity type of the second UE identity; the sensing result of the target UE corresponding to a sensing result type in the sensing result type list; or a timestamp.

In an optional embodiment of the present application, the identity type of the first UE identity is the same as or different from the identity type of the second UE identity.

In an optional embodiment of the present application, the first UE identity is a UE identity used in a communication system, or the first UE identity is a UE identity used in a sensing system. The second UE identity is a UE identity used in the communication system, or the second UE identity is a UE identity used in the sensing system.

In an optional embodiment of the present application, if the identity type of the first UE identity is different from the identity type of the second UE identity, for example, the identity type of the first UE identity is the UE identity used in the communication system and the identity type of the second UE identity is the UE identity used in the sensing system, or the identity type of the first UE identity is the UE identity used in the sensing system and the identity type of the second UE identity is the UE identity used in the communication system, the target device maps the first UE identity according to an identity corresponding relationship between UE identities in the communication system and UE identities in the sensing system, so as to cause a UE identity obtained after mapping to have the same type as the second UE identity, and therefore, it is determined that the access network device requests the sensing result of the target UE, and then, the target device can send the sensing result response message to the access network device according to the sensing result of the target UE.

For example, if the identity type of the first UE identity is the UE identity used in the communication system, and the identity type of the second UE identity is the UE identity used in the sensing system, the target device maps the first UE identity according to the identity corresponding relationship, so as to cause the UE identity obtained after mapping to be the UE identity used in the sensing system. For another example, if the identity type of the first UE identity is the UE identity used in the sensing system, and the identity type of the second UE identity is the UE identity used in the communication system, the target device maps the first UE identity according to the identity corresponding relationship, so as to cause the UE identity obtained after mapping to be the UE identity used in the communication system.

The embodiment of the present application provides a plurality of manners for obtaining the identity corresponding relationship, and the target device obtains the identity corresponding relationship based on one or more of the manners.
A. The target device obtains the identity corresponding relationship from an identity analysis module. The identity analysis module is deployed in the target device, for example, the identity analysis module is preconfigured in the target device.
B. The target device obtains the identity corresponding relationship from an identity analysis service platform. The identity analysis service platform is a cloud platform, and the target device obtains the identity corresponding relationship from the cloud platform.
C. The target device obtains identity analysis information from an application server corresponding to the UE identity type and obtains the identity corresponding relationship according to the identity analysis information. The application server is deployed in a trusted domain of the core network, and alternatively, the application server is deployed in a wide area network.
D. The target device obtains the UE identities in the communication system and the UE identities in the sensing system from UEs, and establishes the identity corresponding relationship according to the identities obtained from the UEs. For example, each UE maintains its own UE identity in the communication system and UE identity in the sensing system, and the target device collects the UE identity of each UE in the communication system and the UE identity in the sensing system from each UE, thereby establishing the identity corresponding relationship.

The above embodiments of the present application are all described in detail in the embodiments corresponding to the access network device, and for avoiding repeated descriptions, the embodiments of the present application are not described in detail herein, and a reader can refer to the related description in the embodiments corresponding to the access network device.

In order to make the reader easily understand the technical solutions of the embodiments of the present application, hereinafter, 3 of some embodiments are provided to exemplarily explain the technical solutions of the embodiments of the present application.

In a first embodiment, an initial serving cell of a UE is cell 1, and the UE simultaneously performs 3 types of data service transmission which are respectively carried by 3 DRBs, in which transmission traffic of DRB1 is small, transmission traffic of DRB2 is large, reliability requirements of the DRB1 and the DRB2 are not high, transmission traffic of DRB3 is small but a reliability requirement is high. In the first embodiment, the target device is deployed in a CU of a base station, the target device is provided with a communication and sensing module, the access network device is the CU of the base station, and specifically, the steps implemented by the access network device described above are implemented by a communication module deployed in the CU.

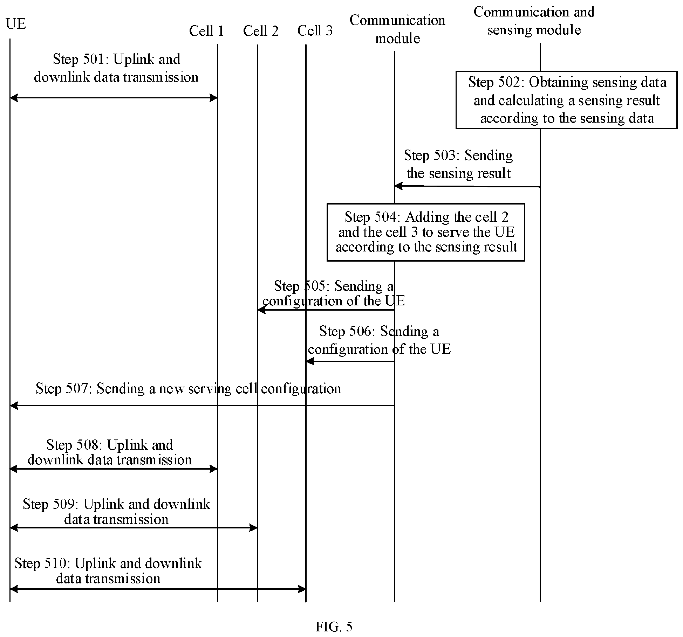

FIG. 5 is a flowchart corresponding to the first embodiment, and as shown in FIG. 5, the following steps are included.

Step 501: performing uplink and downlink data transmission by the UE through the cell 1.

Step 502: obtaining sensing data from the cell 1, cell 2 and cell 3 and calculating a sensing result according to the sensing data by the communication and sensing module deployed in the CU.

Specifically, the communication and sensing module obtains the sensing data from a DU corresponding to the cell 1, a DU corresponding to the cell 2, and a DU corresponding to the cell 3, herein, the DU corresponding to the cell 1, the DU corresponding to the cell 2, and the DU corresponding to the cell 3 all receive a sensing signal transmitted by the UE, and then, the DU corresponding to the cell 1, the DU corresponding to the cell 2, and the DU corresponding to the cell 3 all obtain the sensing data according to the received sensing signal, so that the communication and sensing module obtains the sensing data from the DU corresponding to the cell 1, the DU corresponding to the cell 2, and the DU corresponding to the cell 3, and calculates the sensing result according to the sensing data, the sensing result including absolute position information (latitude and longitude information) of the UE.

Step 503: sending, by the communication and sensing module, the sensing result to the communication module deployed in the CU at a periodic sending moment.

Step 504: determining, by the communication module, to add the cell 2 and the cell 3 to serve the UE in addition to the original cell 1 according to the sensing result.

The communication module determines, based on the sensing result, a distance (for example, 30m) between the UE and the cell 1, a distance (for example, 35m) between the UE and the cell 2, and a distance (for example, 40m) between the UE and the cell 3, so as to determine that the UE enters an overlapped coverage region of the cell 1, the cell 2, and the cell 3, and thus, the cell 2 and the cell 3 are added to serve the UE jointly with the cell 1. Meanwhile, the communication module determines that the DRB1 is transmitted on the cell 1, the DRB2 is transmitted on the cell 1, the cell 2, and the cell 3, and the DRB3 is repeatedly transmitted on the cell 1 and the cell 2.

Step 505 to step 506: sending a configuration of the UE to the cell 2 and the cell 3 respectively by the communication module.

Specifically, the communication and sensing module sends the configuration of the UE to the DU corresponding to the cell 1, the DU corresponding to the cell 2, and the DU corresponding to the cell 3, respectively.

Step 507: sending a new serving cell configuration to the UE by the communication module through the cell 1.

Step 508 to step 510: performing data transmission based on the new serving cell configuration by the UE.

In a second embodiment, initial serving cells of a UE are cell 1 and cell 2, and the UE simultaneously performs 2 types of data service transmission which are respectively carried by 2 DRBs, in which DRB1 is transmitted on the cell 1, and DRB2 is transmitted on the cell 1 and the cell 2. In the second embodiment, the target device is the UE, the target device is provided therein with a communication and sensing module, the access network device is a CU of a base station, and specifically, the steps implemented by the access network device described above are implemented by a communication module deployed in the CU.

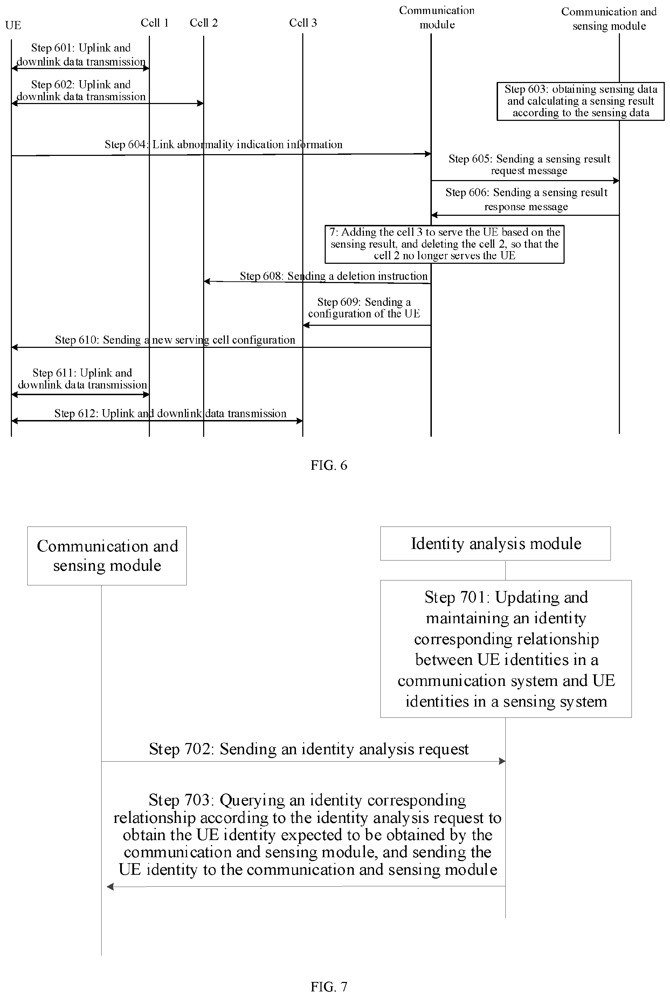

FIG. 6 is a flowchart corresponding to the second embodiment, and as shown in FIG. 6, the following steps are included.

Step 601 to step 602: performing uplink and downlink transmission by the UE through the cell 1 and the cell 2.

Step 603: obtaining sensing data from the cell 1, the cell 2 and cell 3 and calculating a sensing result according to the sensing data by the communication and sensing module deployed in the UE.

Specifically, the communication and sensing module obtains the sensing data from a DU corresponding to the cell 1, a DU corresponding to the cell 2, and a DU corresponding to the cell 3, herein, the DU corresponding to the cell 1, the DU corresponding to the cell 2, and the DU corresponding to the cell 3 all receive a sensing signal transmitted by the UE, and then, the DU corresponding to the cell 1, the DU corresponding to the cell 2, and the DU corresponding to the cell 3 all obtain the sensing data according to the received sensing signal, so that the communication and sensing module obtains the sensing data from the DU corresponding to the cell 1, the DU corresponding to the cell 2, and the DU corresponding to the cell 3, and calculates the sensing result according to the sensing data.

Step 604: receiving, by the communication module deployed in the CU, link abnormality indication information sent by the UE, the link abnormality indication information indicating that a wireless link between the UE and the cell 2 is abnormal.

Step 605: sending a sensing result request message to the communication and sensing module by the communication module.

The sensing result request message carries a first UE identity of the UE, and an identity type of the first UE identity is a GUTI type. A requested sensing result type list includes a UE absolute position type, a UE moving track type and a UE predicted moving track type. A requested sensing result response time range is latest 10 seconds and next 10 seconds.

Step 606: sending a sensing result response message to the communication module by the communication and sensing module.

The sensing result response message includes a second UE identity of the UE (an identity type of the second UE identity is a GUTI type), absolute position information (latitude and longitude information) of the UE, a moving track of the UE, a predicted moving track of the UE, and a timestamp.

Step 607: determining, by the communication module, to add the cell 3 to serve the UE in addition to the original cell 1 and cell 2 according to the sensing result, and deleting the cell 2 by the communication module, so that the cell 2 no longer serves the UE.

The communication module determines that the UE currently enters an overlapped coverage region of the cell 1 and the cell 3 and leaves a coverage region of the cell 2 based on the sensing result, so that the cell 3 is added to serve the UE in conjunction with the cell 1, and the cell 2 is deleted and no longer serves the UE. Meanwhile, the communication module determines that the DRB1 is transmitted on the cell 1 and the DRB2 is transmitted on the cell 1 and the cell 3.

Step 608 to step 609: sending a configuration of the UE to the cell 3 and sending a deletion instruction to the cell 2 to instruct the cell 2 to delete the configuration of the UE by the communication module.

Specifically, the communication module sends the configuration of the UE to the DU corresponding to the cell 1 and the DU corresponding to the cell 3 respectively, and sends the deletion instruction to the DU corresponding to the cell 2.

Step 610: sending a new serving cell configuration to the UE by the communication module through the cell 1.

Step 611 to step 612: performing data transmission based on the new serving cell configuration by the UE.

FIG. 7 is a flowchart corresponding to a third embodiment, and as shown in FIG. 7, the following steps are included.

Step 701: updating and maintaining an identity corresponding relationship between UE identities in a communication system and UE identities in a sensing system by an identity analysis module.

Step 702: sending an identity analysis request to the identity analysis module based on requirements by a communication and sensing module, herein, the identity analysis request includes a UE identity, an identity type of the UE identity, and an identity type of a UE identity expected to be obtained. One identity analysis request carries a plurality of UE identities.

Step 703: querying an identity corresponding relationship according to the identity analysis request to obtain the UE identity expected to be obtained by the communication and sensing module, and sends the UE identity to the communication and sensing module by the identity analysis module.

It should be understood that, although the steps in the flow charts of FIG. 3 to FIG. 7 are shown in sequence as indicated by the arrows, the steps are not necessarily performed in sequence as indicated by the arrows. Unless explicitly stated herein, the steps are not limited to being performed in the exact order and may be performed in other orders. At least part of the steps in FIG. 3 to FIG. 7 include multiple steps or multiple stages, which are not necessarily performed at the same moment, but may be performed at different moments, and the steps or the stages are not necessarily performed in sequence, but may be performed alternately with other steps or at least part of the steps or the stages in other steps.

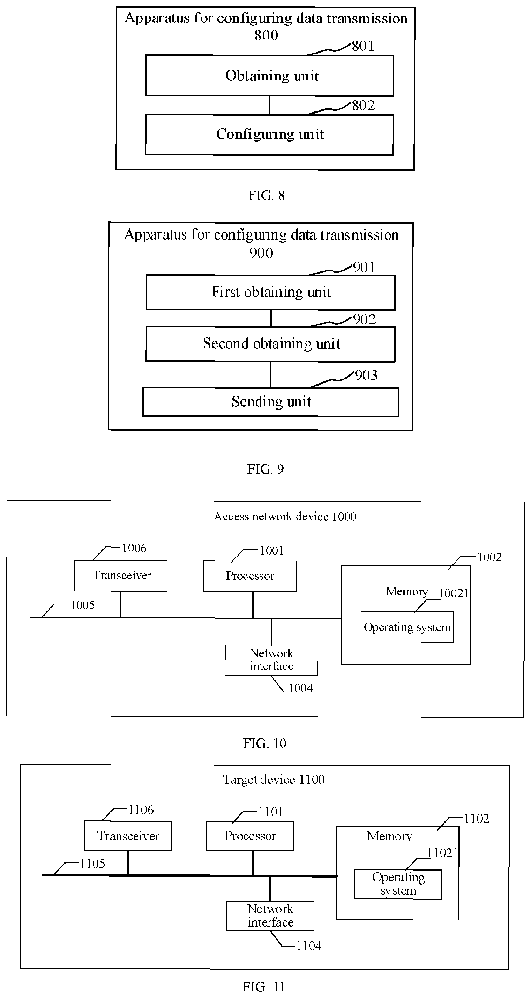

In an embodiment, as shown in FIG. 8, there is provided an apparatus 800 for configuring data transmission applied in an access network device and including an obtaining unit 801 and a configuring unit 802.

The obtaining unit 801 is configured to obtain a sensing result, the sensing result including mobility information of a target UE.

The configuring unit 802 is configured to configure data transmission for the target UE according to the sensing result.

In an optional embodiment of the present application, the configuring unit 802 is specifically configured to perform at least one of the following operations: configuring a serving cell set for the target UE according to the sensing result; configuring a serving TRP set for the target UE according to the sensing result; or scheduling communication resources for the target UE according to the sensing result.

In an optional embodiment of the present application, the obtaining unit 801 is specifically configured to: receive the sensing result sent by a target device, the target device being provided with a communication and sensing module and/or a data module.

In an optional embodiment of the present application, the target device is the target UE. Alternatively, the target device is deployed in an access network. Alternatively, the target device is deployed in a core network.

In an optional embodiment of the present application, the obtaining unit 801 is specifically configured to perform at least one of the following operations:
receiving the sensing result sent by the target device when the sensing result is determined to meet a first condition; receiving the sensing result periodically sent by the target device; or sending a sensing result request message to the target device when a communication condition of the target UE is determined to meet a second condition, and receiving a sensing result response message sent by the target device based on the sensing result request message, the sensing result response message carrying the sensing result.

In an optional embodiment of the present application, the first condition includes at least one of the following contents: the target UE enters a configuration region; the target UE leaves the configuration region; a moving distance of the target UE within the configuration region is greater than a first distance threshold; a distance between a current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In an optional embodiment of the present application, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

In an optional embodiment of the present application, the sensing result request message includes at least one of: a first UE identity of the target UE; an identity type of the first UE identity; a requested sensing result type list; or a requested sensing result response time range.

In an optional embodiment of the present application, the sensing result response message includes at least one of: a second UE identity of the target UE; an identity type of the second UE identity; the sensing result of the target UE corresponding to a sensing result type in the sensing result type list; or a timestamp.

In an optional embodiment of the present application, the first UE identity is a UE identity used in a communication system, or the first UE identity is a UE identity used in a sensing system, The second UE identity is a UE identity used in the communication system, or the second UE identity is a UE identity used in the sensing system.

In an embodiment, as shown in FIG. 9, there is provided an apparatus 900 for configuring data transmission used in a target device, the target device being provided with a communication and sensing module and/or a data module, and the apparatus including a first obtaining unit 901, a second obtaining unit 902, and a sending unit 903.

The first obtaining unit 901 is configured to obtain sensing data for a target UE, the sensing data being obtained based on a sensing signal corresponding to the target UE.

The second obtaining unit 902 is configured to obtain a sensing result according to the sensing data.

The sending unit 903 is configured to send the sensing result to an access network device, the sensing result including mobility information of the target UE.

In an optional embodiment of the present application, a sending end of the sensing signal is a base station and/or the target UE, and a receiving end of the sensing signal is a base station and/or the target UE.

In an optional embodiment of the present application, the sensing signal is a wireless signal for sensing. Alternatively, the sensing signal is a wireless signal configured for both sensing and communication.

In an optional embodiment of the present application, the sensing data is obtained by sensing the sensing signal and/or measuring the sensing signal.

In an optional embodiment of the present application, the first obtaining unit 901 is specifically configured to perform one of the following operations: obtaining the sensing data from one or more base stations; obtaining the sensing data from the target UE; or obtaining the sensing data from one or more base stations and the target UE.

In an optional embodiment of the present application, the target device is the target UE. Alternatively, the target device is deployed in an access network. Alternatively, the target device is deployed in a core network.

In an optional embodiment of the present application, the sending unit 903 is specifically configured to perform at least one of the following operations: when the sensing result is determined to meet a first condition, sending the sensing result to the access network device; periodically sending the sensing result to the access network device; or after a sensing result request message sent by the access network device is received, sending a sensing result response message to the access network device, the sensing result response message carrying the sensing result, and the sensing result request message being sent by the access network device when a communication condition of the target UE is determined to meet a second condition.

In an optional embodiment of the present application, the first condition includes at least one of the following contents: the target UE enters a configuration region; the target UE leaves the configuration region; a moving distance of the target UE within the configuration region is greater than a first distance threshold; a distance between a current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In an optional embodiment of the present application, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

In an optional embodiment of the present application, the sensing result request message includes at least one of: a first UE identity of the target UE; an identity type of the first UE identity; a requested sensing result type list; or a requested sensing result response time range.

In an optional embodiment of the present application, the sensing result response message includes at least one of: a second UE identity of the target UE; an identity type of the second UE identity; the sensing result of the target UE corresponding to a sensing result type in the sensing result type list; or a timestamp.

In an optional embodiment of the present application, the first UE identity is a UE identity used in a communication system, or the first UE identity is a UE identity used in a sensing system. The second UE identity is a UE identity used in the communication system, or the second UE identity is a UE identity used in the sensing system.

Reference may be made to the definitions of the method for configuring data transmission described above for specific definitions of the apparatus for configuring data transmission, which are not repeated herein. The units in the apparatus for configuring data transmission may be wholly or partially implemented by software, hardware and a combination thereof. The units may be embedded in or independent of a processor in a communication device in hardware, or may be stored in a memory in the communication device in software, such that the processor can conveniently call the units to execute the operations corresponding to the units.

It should be noted that the division of the units in the embodiment of the present application is schematic, and is only logical function division, and there may be another division manner in actual implementation. In addition, functional units in the embodiments of the present application may be integrated into one processing unit, or each of the units may exist alone physically, or two or more units are integrated into one unit. The integrated unit can be realized in the form of hardware or a software functional unit.

When implemented in the form of software functional units and sold or used as independent products, the integrated units can be stored in a processor-readable storage medium. Based on such an understanding, the technical solutions of the present application essentially, or the part contributing to the prior art, or all or a part of the technical solutions may be implemented in the form of a software product. The computer software product is stored in a storage medium and includes several instructions for instructing a computer device (which may be a personal computer, a server, or a network device) or a processor to perform all or a part of steps of the method described in the embodiment of the present application.

It should be noted herein that the apparatus according to the embodiment of the present application can implement all the method steps implemented in the method embodiment, and can achieve the same technical effects, and the same parts and beneficial effects of this embodiment as those of the method embodiment are not repeated herein.

FIG. 10 is a schematic structural diagram of an access network device according to an embodiment of the present application. The access network device 1000 shown in FIG. 10 includes: at least one processor 1001, a memory 1002, and at least one network interface 1004. The various components in the access network device 1000 are coupled together by a bus system 1005. It may be appreciated that the bus system 1005 is configured to implement connected communication between these components. The bus system 1005 may include a power bus, a control bus, and a status signal bus in addition to a data bus. For clarity of illustration, however, the various buses are labeled as the bus system 1005 in FIG. 10. In addition, in the embodiments of the present application, the access network device further includes a transceiver 1006, and the transceiver may include multiple elements, that is, include a transmitter and a receiver, and provide units for communicating with various other apparatuses over a transmission medium.

It is to be understood that the memory 1002 in the embodiments of the present application may be a transitory memory or a non-transitory memory, or may include both transitory and non-transitory memories. The non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM) serving as an external cache. By way of example and not limitation, many forms of RAMs are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), and a Direct Rambus RAM (DRRAM). The memory 1002 of the system and methods described in the embodiments of the present application is intended to comprise, but not limited to, these and any other suitable types of memories.

In some implementations, the memory 1002 stores the following elements: executable modules or data structures, or subsets thereof or expanded sets thereof: an operating system 10021. The operating system 10021 includes various system programs such as a framework layer, a core library layer, and a driver layer for implementing various basic services and processing hardware-based tasks.

In the embodiments of the present application, by calling the program or instructions stored in the memory 1002, the processor performs the following operations: obtaining a sensing result, the sensing result including mobility information of a target UE; and configuring data transmission for the target UE according to the sensing result.

In an embodiment, the processor is specifically configured to perform at least one of the following operations: configuring a serving cell set for the target UE according to the sensing result; configuring a serving TRP set for the target UE according to the sensing result; or scheduling communication resources for the target UE according to the sensing result.

In an embodiment, the processor is specifically configured to perform the following operation: controlling the transceiver to receive the sensing result sent by a target device, the target device being provided with a communication and sensing module and/or a data module.

In an embodiment, the target device is the target UE. Alternatively, the target device is deployed in an access network. Alternatively, the target device is deployed in a core network.

In an embodiment, the processor is specifically configured to perform at least one of the following operations: controlling the transceiver to receive the sensing result sent by the target device when the sensing result is determined to meet a first condition; controlling the transceiver to receive the sensing result periodically sent by the target device; or controlling the transceiver to send a sensing result request message to the target device when a communication condition of the target UE is determined to meet a second condition, and controlling the transceiver to receive a sensing result response message sent by the target device based on the sensing result request message, the sensing result response message carrying the sensing result.

In an embodiment, the first condition includes at least one of the following contents: the target UE enters a configuration region; the target UE leaves the configuration region; a moving distance of the target UE within the configuration region is greater than a first distance threshold; a distance between a current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In an embodiment, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

In an embodiment, the sensing result request message includes at least one of: a first UE identity of the target UE; an identity type of the first UE identity; a requested sensing result type list; or a requested sensing result response time range.

In an embodiment, the sensing result response message includes at least one of: a second UE identity of the target UE; an identity type of the second UE identity; the sensing result of the target UE corresponding to a sensing result type in the sensing result type list; or a timestamp.

In an embodiment, the first UE identity is a UE identity used in a communication system, or the first UE identity is a UE identity used in a sensing system. The second UE identity is a UE identity used in the communication system, or the second UE identity is a UE identity used in the sensing system.

As described above, part or all of the method according to the embodiments of the present application may be applied to the processor 1001, or implemented by the processor 1001, or implemented by the processor 1001 and other elements (for example, the transceiver) in cooperation. The processor 1001 may be an integrated circuit chip having a signal processing capability. In implementation, the steps of the above method may be implemented by integrated logic circuits of hardware or instructions in a software form in the processor 1001. The processor 1001 may be a general-purpose processor, a Digital Signal Processor (DSP), an Application Specific Integrated Circuit (ASIC), a Field Programmable Gate Array (FPGA), other programmable logic devices, discrete gate and transistor logic devices, and discrete hardware components. The various methods, steps, and logic block views disclosed in the embodiments of the present application may be implemented or performed. The general-purpose processor may be a microprocessor or any conventional processor, or the like. The steps of the method according to the embodiments of the present application may be directly implemented by a hardware decoding processor, or implemented by a combination of hardware and software modules in the decoding processor. The software modules may be located in a storage medium well known in the art such as an RAM, a flash memory, an ROM, a PROM, an EEPROM, and a register. The storage medium is located in the memory 1002, and the processor 1001 reads information in the memory 1002 and completes the steps of the above method in combination with hardware thereof.

It is to be understood that the embodiments described herein may be implemented in hardware, software, firmware, middleware, microcodes, or any combination thereof. For the hardware implementation, processing units may be implemented in one or more Application Specific Integrated Circuits (ASICs), Digital Signal Processors (DSPs), Digital Signal Processing Devices (DSPDs), Programmable Logic Devices (PLDs), Field-Programmable Gate Arrays (FPGAs), general-purpose processors, controllers, microcontrollers, microprocessors, other electronic units for performing the functions of the present application, or combinations thereof.

For the software implementation, the technology described in the embodiments of the present application may be implemented with modules (e.g., processes, functions, or the like) that perform the functions described in the embodiments of the present application. The software codes may be stored in the memory and executed by the processor 1001. The memory may be implemented in or outside the processor 1001.

FIG. 11 is a schematic structural diagram of a target device according to an embodiment of the present application. The target device 1100 shown in FIG. 11 includes: at least one processor 1101, a memory 1102, and at least one network interface 1104. The various components in the target device 1100 are coupled together by a bus system 1105. It may be appreciated that the bus system 1105 is configured to implement connected communication between these components. The bus system 1105 may include a power bus, a control bus, and a status signal bus in addition to a data bus. For clarity of illustration, however, the various buses are labeled as the bus system 1105 in FIG. 11. In addition, in the embodiments of the present application, the access network device further includes a transceiver 1106, and the transceiver may include multiple elements, that is, include a transmitter and a receiver, and provide units for communicating with various other apparatuses over a transmission medium.

It is to be understood that the memory 1102 in the embodiments of the present application may be a transitory memory or a non-transitory memory, or may include both transitory and non-transitory memories. The non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM) serving as an external cache. By way of example and not limitation, many forms of RAMs are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), and a Direct Rambus RAM (DRRAM). The memory 1102 of the system and methods described in the embodiments of the present application is intended to comprise, but not limited to, these and any other suitable types of memories.

In some implementations, the memory 1102 stores the following elements: executable modules or data structures, or subsets thereof or expanded sets thereof: an operating system 11021. The operating system 11021 includes various system programs such as a framework layer, a core library layer, and a driver layer for implementing various basic services and processing hardware-based tasks.

In the embodiments of the present application, by calling the program or instructions stored in the memory 1102, the processor performs the following operations: obtaining sensing data for a target UE, the sensing data being obtained based on a sensing signal corresponding to the target UE; and obtaining a sensing result according to the sensing data and controlling the transceiver to send the sensing result to an access network device, the sensing result including mobility information of the target UE.

In an embodiment, a sending end of the sensing signal is a base station and/or the target UE, and a receiving end of the sensing signal is a base station and/or the target UE.

In an embodiment, the sensing signal is a wireless signal for sensing. Alternatively, the sensing signal is a wireless signal configured for both sensing and communication.

In an embodiment, the sensing data is obtained by sensing the sensing signal and/or measuring the sensing signal.

In an embodiment, the processor is specifically configured to perform one of the following operations: obtaining the sensing data from one or more base stations; obtaining the sensing data from the target UE; or obtaining the sensing data from one or more base stations and the target UE.

In an embodiment, the target device is the target UE. Alternatively, the target device is deployed in an access network. Alternatively, the target device is deployed in a core network.

In an embodiment, the processor is specifically configured to perform at least one of the following operations: when the sensing result is determined to meet a first condition, controlling the transceiver to send the sensing result to the access network device; controlling the transceiver to periodically send the sensing result to the access network device; or after a sensing result request message sent by the access network device is received, controlling the transceiver to send a sensing result response message to the access network device, the sensing result response message carrying the sensing result, and the sensing result request message being sent by the access network device when a communication condition of the target UE is determined to meet a second condition.

In an embodiment, the first condition includes at least one of the following contents: the target UE enters a configuration region; the target UE leaves the configuration region; a moving distance of the target UE within the configuration region is greater than a first distance threshold; a distance between a current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In an embodiment, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

In an embodiment, the sensing result request message includes at least one of: a first UE identity of the target UE; an identity type of the first UE identity; a requested sensing result type list; or a requested sensing result response time range.

In an embodiment, the sensing result response message includes at least one of: a second UE identity of the target UE; an identity type of the second UE identity; the sensing result of the target UE corresponding to a sensing result type in the sensing result type list; or a timestamp.

In an embodiment, the first UE identity is a UE identity used in a communication system, or the first UE identity is a UE identity used in a sensing system. The second UE identity is a UE identity used in the communication system, or the second UE identity is a UE identity used in the sensing system.

As described above, part or all of the method according to the embodiments of the present application may be applied to the processor 1101, or implemented by the processor 1101, or implemented by the processor 1101 and other elements (for example, the transceiver) in cooperation. The processor 1101 may be an integrated circuit chip having a signal processing capability. In implementation, the steps of the above method may be implemented by integrated logic circuits of hardware or instructions in a software form in the processor 1101. The processor 1101 may be a general-purpose processor, a Digital Signal Processor (DSP), an Application Specific Integrated Circuit (ASIC), a Field Programmable Gate Array (FPGA), other programmable logic devices, discrete gate and transistor logic devices, and discrete hardware components. The various methods, steps, and logic block views disclosed in the embodiments of the present application may be implemented or performed. The general-purpose processor may be a microprocessor or any conventional processor, or the like. The steps of the method according to the embodiments of the present application may be directly implemented by a hardware decoding processor, or implemented by a combination of hardware and software modules in the decoding processor. The software modules may be located in a storage medium well known in the art such as an RAM, a flash memory, an ROM, a PROM, an EEPROM, and a register. The storage medium is located in the memory 1102, and the processor 1101 reads information in the memory 1102 and completes the steps of the above method in combination with hardware thereof. It is to be understood that the embodiments described herein may be implemented in hardware, software, firmware, middleware, microcodes, or any combination thereof. For the hardware implementation, processing units may be implemented in one or more Application Specific Integrated Circuits (ASICs), Digital Signal Processors (DSPs), Digital Signal Processing Devices (DSPDs), Programmable Logic Devices (PLDs), Field-Programmable Gate Arrays (FPGAs), general-purpose processors, controllers, microcontrollers, microprocessors, other electronic units for performing the functions of the present application, or combinations thereof. For the software implementation, the technology described in the embodiments of the present application may be implemented with modules (e.g., processes, functions, or the like) that perform the functions described in the embodiments of the present application. The software codes may be stored in the memory and executed by the processor 1101. The memory may be implemented in or outside the processor 1101.

In an embodiment, there is provided a computer-readable storage medium having a computer program stored thereon, the computer program, when executed by a processor, implementing the following steps:
obtaining a sensing result, the sensing result including mobility information of a target UE; and configuring data transmission for the target UE according to the sensing result.

In an embodiment, the computer program, when executed by the processor, further implements at least one of the following steps: configuring a serving cell set for the target UE according to the sensing result; configuring a serving TRP set for the target UE according to the sensing result; or scheduling communication resources for the target UE according to the sensing result.

In an embodiment, the computer program, when executed by the processor, further implements the following step: receiving the sensing result sent by a target device, the target device being provided with a communication and sensing module and/or a data module.

In an embodiment, the target device is the target UE. Alternatively, the target device is deployed in an access network. Alternatively, the target device is deployed in a core network.

In an embodiment, the computer program, when executed by the processor, further implements at least one of the following steps: receiving the sensing result sent by the target device when the sensing result is determined to meet a first condition; receiving the sensing result periodically sent by the target device; or sending a sensing result request message to the target device when a communication condition of the target UE is determined to meet a second condition, and receiving a sensing result response message sent by the target device based on the sensing result request message, the sensing result response message carrying the sensing result.

In an embodiment, the first condition includes at least one of the following contents: the target UE enters a configuration region; the target UE leaves the configuration region; a moving distance of the target UE within the configuration region is greater than a first distance threshold; a distance between a current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In an embodiment, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

In an embodiment, the sensing result request message includes at least one of: a first UE identity of the target UE; an identity type of the first UE identity; a requested sensing result type list; or a requested sensing result response time range.

In an embodiment, the sensing result response message includes at least one of: a second UE identity of the target UE; an identity type of the second UE identity; the sensing result of the target UE corresponding to a sensing result type in the sensing result type list; or a timestamp.

In an embodiment, the first UE identity is a UE identity used in a communication system, or the first UE identity is a UE identity used in a sensing system. The second UE identity is a UE identity used in the communication system, or the second UE identity is a UE identity used in the sensing system.

In an embodiment, there is provided a computer-readable storage medium having a computer program stored thereon, the computer program, when executed by a processor, implementing the following steps:
obtaining sensing data for a target UE, the sensing data being obtained based on a sensing signal corresponding to the target UE; and obtaining a sensing result according to the sensing data and sending the sensing result to an access network device, the sensing result including mobility information of the target UE.

In an embodiment, a sending end of the sensing signal is a base station and/or the target UE; a receiving end of the sensing signal is a base station and/or the target UE.

In an embodiment, the sensing signal is a wireless signal for sensing. Alternatively, the sensing signal is a wireless signal configured for both sensing and communication.

In an embodiment, the sensing data is obtained by sensing the sensing signal and/or measuring the sensing signal.

In an embodiment, the computer program, when executed by the processor, further implements one of the following steps: obtaining the sensing data from one or more base stations; obtaining the sensing data from the target UE; or obtaining the sensing data from one or more base stations and the target UE.

In an embodiment, the target device is the target UE. Alternatively, the target device is deployed in an access network. Alternatively, the target device is deployed in a core network.

In an embodiment, the computer program, when executed by the processor, further implements at least one of the following steps: when the sensing result is determined to meet a first condition, sending the sensing result to the access network device; periodically sending the sensing result to the access network device; or after a sensing result request message sent by the access network device is received, sending a sensing result response message to the access network device, the sensing result response message carrying the sensing result, and the sensing result request message being sent by the access network device when a communication condition of the target UE is determined to meet a second condition.

In an embodiment, the first condition includes at least one of the following contents: the target UE enters a configuration region; the target UE leaves the configuration region; a moving distance of the target UE within the configuration region is greater than a first distance threshold; a distance between a current position of the target UE and a position of the target UE sensed last time is larger than a second distance threshold; a moving direction variation of the target UE is larger than a direction change threshold; a moving speed variation of the target UE is larger than a speed change threshold; a moving track of the target UE deviates from a predicted moving track; an object of a target type is found within a preset range around the target UE; or a specific object moves out of the preset range around the target UE.

In an embodiment, the second condition includes at least one of the following contents: a signal quality of any serving cell reported by the target UE is lower than a first signal quality threshold; the signal quality of any serving cell reported by the target UE is higher than a second signal quality threshold; a signal quality of a non-serving cell reported by the target UE is higher than a third signal quality threshold; the signal quality of the non-serving cell reported by the target UE is higher than that of a serving cell reported by the target UE, and a difference therebetween is greater than a signal quality difference threshold; at least one cell serving the target UE determines that an uplink signal quality of the target UE is lower than a fourth signal quality threshold, or at least one TRP serving the target UE determines that the uplink signal quality of the target UE is lower than the fourth signal quality threshold; at least one cell serving the target UE determines that the uplink signal quality of the target UE is higher than a fifth signal quality threshold, or at least one TRP serving the target UE determines that the uplink signal quality of the target UE is higher than the fifth signal quality threshold; or a link abnormality occurs between the target UE and at least one cell serving the target UE, or a link abnormality occurs between the target UE and at least one TRP serving the target UE.

In an embodiment, the sensing result request message includes at least one of: a first UE identity of the target UE; an identity type of the first UE identity; a requested sensing result type list; or a requested sensing result response time range.

In an embodiment, the sensing result response message includes at least one of: a second UE identity of the target UE; an identity type of the second UE identity; the sensing result of the target UE corresponding to a sensing result type in the sensing result type list; or a timestamp.

In an embodiment, the first UE identity is a UE identity used in a communication system, or the first UE identity is a UE identity used in a sensing system. The second UE identity is a UE identity used in the communication system, or the second UE identity is a UE identity used in the sensing system.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification. The above-described embodiments are only several implementations of the present application, and the descriptions are relatively specific and detailed, but they should not be construed as limiting the scope of the present invention. It should be understood by those of ordinary skill in the art that various modifications and improvements can be made without departing from the concept of the present application, and all fall within the protection scope of the present application. Therefore, the protection scope of the present application should be subject to the appended claims.

## Claims

1. A method for configuring data transmission, the method comprising:
obtaining a sensing result by an access network device, the sensing result comprising mobility information of a target UE; and
configuring, by the access network device, data transmission for the target UE according to the sensing result.

2. The method according to claim 1, wherein configuring, by the access network device, the data transmission for the target UE according to the sensing result comprises at least one of:
configuring a serving cell set for the target UE according to the sensing result by the access network device;
configuring a serving TRP set for the target UE according to the sensing result by the access network device; or
scheduling communication resources for the target UE according to the sensing result by the access network device.

3. The method according to claim 1 or 2, wherein obtaining the sensing result by the access network device comprises:
receiving, by the access network device, the sensing result sent by a target device, wherein the target device is provided with a communication and sensing module and/or a data module.

4. The method according to claim 3, wherein the target device is the target UE; or, the target device is deployed in an access network; or, the target device is deployed in a core network.

5. The method according to claim 3, wherein receiving, by the access network device, the sensing result sent by the target device comprises at least one of:
receiving, by the access network device, the sensing result sent by the target device when the sensing result is determined to meet a first condition;
receiving, by the access network device, the sensing result periodically sent by the target device; or
sending, by the access network device, a sensing result request message to the target device when a communication condition of the target UE is determined to meet a second condition, and receiving, by the access network device, a sensing result response message sent by the target device based on the sensing result request message, the sensing result response message carrying the sensing result.

6. The method according to claim 5, wherein the first condition comprises at least one of the following contents:
the target UE enters a configuration region;
the target UE leaves the configuration region;
a moving distance of the target UE within the configuration region is greater than a first distance threshold;
a distance between a current position of the target UE and a position of the target UE sensed last time is larger than a second distance threshold;
a moving direction variation of the target UE is larger than a direction change threshold;
a moving speed variation of the target UE is larger than a speed change threshold;
a moving track of the target UE deviates from a predicted moving track;
an object of a target type is found within a preset range around the target UE; or
a specific object moves out of the preset range around the target UE.

7. The method according to claim 5, wherein the second condition comprises at least one of the following contents:
a signal quality of any serving cell reported by the target UE is lower than a first signal quality threshold;
the signal quality of any serving cell reported by the target UE is higher than a second signal quality threshold;
a signal quality of a non-serving cell reported by the target UE is higher than a third signal quality threshold;
the signal quality of the non-serving cell reported by the target UE is higher than that of a serving cell reported by the target UE, and a difference therebetween is greater than a signal quality difference threshold;
at least one cell serving the target UE determines that an uplink signal quality of the target UE is lower than a fourth signal quality threshold, or at least one TRP serving the target UE determines that the uplink signal quality of the target UE is lower than the fourth signal quality threshold;
at least one cell serving the target UE determines that the uplink signal quality of the target UE is higher than a fifth signal quality threshold, or at least one TRP serving the target UE determines that the uplink signal quality of the target UE is higher than the fifth signal quality threshold; or
a link abnormality occurs between the target UE and at least one cell serving the target UE, or a link abnormality occurs between the target UE and at least one TRP serving the target UE.

8. The method according to claim 5, wherein the sensing result request message comprises at least one of:
a first UE identity of the target UE;
an identity type of the first UE identity;
a requested sensing result type list; or
a requested sensing result response time range.

9. The method according to claim 8, wherein the sensing result response message comprises at least one of:
a second UE identity of the target UE;
an identity type of the second UE identity;
the sensing result of the target UE corresponding to a sensing result type in the sensing result type list; or
a timestamp.

10. The method according to claim 9, wherein the first UE identity is a UE identity used in a communication system, or the first UE identity is a UE identity used in a sensing system;
the second UE identity is a UE identity used in the communication system, or the second UE identity is a UE identity used in the sensing system.

11. A method for configuring data transmission, the method comprising:
obtaining sensing data for a target UE by a target device, wherein the sensing data is obtained based on a sensing signal corresponding to the target UE, and the target device is provided with a communication and sensing module and/or a data module; and
obtaining a sensing result according to the sensing data and sending the sensing result to an access network device by the target device, the sensing result comprising mobility information of the target UE.

12. The method according to claim 11, wherein a sending end of the sensing signal is a base station and/or the target UE; and a receiving end of the sensing signal is a base station and/or the target UE.

13. The method according to claim 11, wherein the sensing signal is a wireless signal configured for sensing; or, the sensing signal is a wireless signal configured for both sensing and communication.

14. The method according to claim 11, wherein the sensing data is obtained by sensing the sensing signal and/or measuring the sensing signal.

15. The method according to any one of claims 11 to 14, wherein obtaining the sensing data for the target UE by the target device comprises one of:
obtaining the sensing data from one or more base stations by the target device;
obtaining the sensing data from the target UE by the target device; or
obtaining the sensing data from one or more base stations and the target UE by the target device.

16. The method according to any one of claims 11 to 14, wherein the target device is the target UE; or, the target device is deployed in an access network; or, the target device is deployed in a core network.

17. The method according to any one of claims 11 to 14, wherein sending the sensing result to the access network device comprises at least one of:
when the sensing result is determined to meet a first condition, sending the sensing result to the access network device by the target device;
periodically sending the sensing result to the access network device by the target device; or
after a sensing result request message sent by the access network device is received, sending a sensing result response message to the access network device by the target device, the sensing result response message carrying the sensing result, and the sensing result request message being sent by the access network device when a communication condition of the target UE is determined to meet a second condition.

18. The method according to claim 17, wherein the first condition comprises at least one of the following contents:
the target UE enters a configuration region;
the target UE leaves the configuration region;
a moving distance of the target UE within the configuration region is greater than a first distance threshold;
a distance between a current position of the target UE and a position of the target UE sensed last time is larger than a second distance threshold;
a moving direction variation of the target UE is larger than a direction change threshold;
a moving speed variation of the target UE is larger than a speed change threshold;
a moving track of the target UE deviates from a predicted moving track;
an object of a target type is found within a preset range around the target UE; or
a specific object moves out of the preset range around the target UE.

19. The method according to claim 17, wherein the second condition comprises at least one of the following contents:
a signal quality of any serving cell reported by the target UE is lower than a first signal quality threshold;
the signal quality of any serving cell reported by the target UE is higher than a second signal quality threshold;
a signal quality of a non-serving cell reported by the target UE is higher than a third signal quality threshold;
the signal quality of the non-serving cell reported by the target UE is higher than that of a serving cell reported by the target UE, and a difference therebetween is greater than a signal quality difference threshold;
at least one cell serving the target UE determines that an uplink signal quality of the target UE is lower than a fourth signal quality threshold, or at least one TRP serving the target UE determines that the uplink signal quality of the target UE is lower than the fourth signal quality threshold;
at least one cell serving the target UE determines that the uplink signal quality of the target UE is higher than a fifth signal quality threshold, or at least one TRP serving the target UE determines that the uplink signal quality of the target UE is higher than the fifth signal quality threshold; or
a link abnormality occurs between the target UE and at least one cell serving the target UE, or a link abnormality occurs between the target UE and at least one TRP serving the target UE.

20. The method according to claim 17, wherein the sensing result request message comprises at least one of:
a first UE identity of the target UE;
an identity type of the first UE identity;
a requested sensing result type list; or
a requested sensing result response time range.

21. The method according to claim 20, wherein the sensing result response message comprises at least one of:
a second UE identity of the target UE;
an identity type of the second UE identity;
the sensing result of the target UE corresponding to a sensing result type in the sensing result type list; or
a timestamp.

22. The method according to claim 21, wherein the first UE identity is a UE identity used in a communication system, or the first UE identity is a UE identity used in a sensing system;
the second UE identity is a UE identity used in the communication system, or the second UE identity is a UE identity used in the sensing system.

23. An apparatus for configuring data transmission, which is applied in an access network device, wherein the apparatus comprises:
an obtaining unit configured to obtain a sensing result, the sensing result comprising mobility information of a target UE; and
a configuring unit configured to configure data transmission for the target UE according to the sensing result.

24. An apparatus for configuring data transmission, which is applied in a target device, the target device being provided with a communication and sensing module and/or a data module, and the apparatus comprising:
a first obtaining unit configured to obtain sensing data for a target UE, wherein the sensing data is obtained based on a sensing signal corresponding to the target UE;
a second obtaining unit configured to obtain a sensing result according to the sensing data; and
a sending unit configured to send the sensing result to an access network device, the sensing result comprising mobility information of the target UE.

25. An access network device, comprising a memory, a transceiver, and a processor:
wherein the memory is configured for storing a computer program; the transceiver is configured for transmitting and receiving data under control of the processor; and the processor is configured for reading the computer program in the memory and performing the following operations:
obtaining a sensing result, the sensing result comprising mobility information of a target UE; and
configuring data transmission for the target UE according to the sensing result.

26. The access network device according to claim 25, wherein the processor is configured to perform at least one of the following operations:
configuring a serving cell set for the target UE according to the sensing result;
configuring a serving TRP set for the target UE according to the sensing result; or
scheduling communication resources for the target UE according to the sensing result.

27. The access network device according to claim 25, wherein the processor is configured to perform the following operation: controlling the transceiver to receive the sensing result sent by a target device, the target device being provided with a communication and sensing module and/or a data module.

28. The access network device according to claim 27, wherein the target device is the target UE; or, the target device is deployed in an access network; or, the target device is deployed in a core network.

29. The access network device according to claim 27, wherein the processor is configured to perform at least one of the following operations:
controlling the transceiver to receive the sensing result sent by the target device when the sensing result is determined to meet a first condition;
controlling the transceiver to receive the sensing result periodically sent by the target device; or
controlling the transceiver to send a sensing result request message to the target device when a communication condition of the target UE is determined to meet a second condition, and controlling the transceiver to receive a sensing result response message sent by the target device based on the sensing result request message, the sensing result response message carrying the sensing result.

30. The access network device according to claim 29, wherein the first condition comprises at least one of the following contents:
the target UE enters a configuration region;
the target UE leaves the configuration region;
a moving distance of the target UE within the configuration region is greater than a first distance threshold;
a distance between a current position of the target UE and a position of the target UE sensed last time is larger than a second distance threshold;
a moving direction variation of the target UE is larger than a direction change threshold;
a moving speed variation of the target UE is larger than a speed change threshold;
a moving track of the target UE deviates from a predicted moving track;
an object of a target type is found within a preset range around the target UE; or
a specific object moves out of the preset range around the target UE.

31. The access network device according to claim 29, wherein the second condition comprises at least one of the following contents:
a signal quality of any serving cell reported by the target UE is lower than a first signal quality threshold;
the signal quality of any serving cell reported by the target UE is higher than a second signal quality threshold;
a signal quality of a non-serving cell reported by the target UE is higher than a third signal quality threshold;
the signal quality of the non-serving cell reported by the target UE is higher than that of a serving cell reported by the target UE, and a difference therebetween is greater than a signal quality difference threshold;
at least one cell serving the target UE determines that an uplink signal quality of the target UE is lower than a fourth signal quality threshold, or at least one TRP serving the target UE determines that the uplink signal quality of the target UE is lower than the fourth signal quality threshold;
at least one cell serving the target UE determines that the uplink signal quality of the target UE is higher than a fifth signal quality threshold, or at least one TRP serving the target UE determines that the uplink signal quality of the target UE is higher than the fifth signal quality threshold; or
a link abnormality occurs between the target UE and at least one cell serving the target UE, or a link abnormality occurs between the target UE and at least one TRP serving the target UE.

32. The access network device according to claim 29, wherein the sensing result request message comprises at least one of:
a first UE identity of the target UE;
an identity type of the first UE identity;
a requested sensing result type list; or
a requested sensing result response time range.

33. The access network device according to claim 32, wherein the sensing result response message comprises at least one of:
a second UE identity of the target UE;
an identity type of the second UE identity;
the sensing result of the target UE corresponding to a sensing result type in the sensing result type list; or
a timestamp.

34. The access network device according to claim 33, wherein the first UE identity is a UE identity used in a communication system, or the first UE identity is a UE identity used in a sensing system;
the second UE identity is a UE identity used in the communication system, or the second UE identity is a UE identity used in the sensing system.

35. A target device, wherein the target device is provided with a communication and sensing module and/or a data module, and comprises a memory, a transceiver, and a processor:
the memory is configured for storing a computer program; the transceiver is configured for transmitting and receiving data under control of the processor; and the processor is configured for reading the computer program in the memory and performing the following operations:
obtaining sensing data for a target UE, wherein the sensing data is obtained based on a sensing signal corresponding to the target UE; and
obtaining a sensing result according to the sensing data and controlling the transceiver to send the sensing result to an access network device, the sensing result comprising mobility information of the target UE.

36. The target device according to claim 35, wherein a sending end of the sensing signal is a base station and/or the target UE; and a receiving end of the sensing signal is a base station and/or the target UE.

37. The target device according to claim 35, wherein the sensing signal is a wireless signal configured for sensing; or, the sensing signal is a wireless signal configured for both sensing and communication.

38. The target device according to claim 35, wherein the sensing data is obtained by sensing the sensing signal and/or measuring the sensing signal.

39. The target device according to any one of claims 35 to 38, wherein the processor is specifically configured to perform one of the following operations:
obtaining the sensing data from one or more base stations;
obtaining the sensing data from the target UE; or
obtaining the sensing data from one or more base stations and the target UE.

40. The target device according to any one of claims 35 to 38, wherein the target device is the target UE; or, the target device is deployed in an access network; or, the target device is deployed in a core network.

41. The target device according to any one of claims 35 to 38, wherein the processor is specifically configured to perform at least one of the following operations:
when the sensing result is determined to meet a first condition, controlling the transceiver to send the sensing result to the access network device;
controlling the transceiver to periodically send the sensing result to the access network device; or
after a sensing result request message sent by the access network device is received, controlling the transceiver to send a sensing result response message to the access network device, the sensing result response message carrying the sensing result, and the sensing result request message being sent by the access network device when a communication condition of the target UE is determined to meet a second condition.

42. The target device according to claim 41, wherein the first condition comprises at least one of the following contents:
the target UE enters a configuration region;
the target UE leaves the configuration region;
a moving distance of the target UE within the configuration region is greater than a first distance threshold;
a distance between a current position of the target UE and a position of the target UE sensed last time is larger than a second distance threshold;
a moving direction variation of the target UE is larger than a direction change threshold;
a moving speed variation of the target UE is larger than a speed change threshold;
a moving track of the target UE deviates from a predicted moving track;
an object of a target type is found within a preset range around the target UE; or
a specific object moves out of the preset range around the target UE.

43. The target device according to claim 41, wherein the second condition comprises at least one of the following contents:
a signal quality of any serving cell reported by the target UE is lower than a first signal quality threshold;
the signal quality of any serving cell reported by the target UE is higher than a second signal quality threshold;
a signal quality of a non-serving cell reported by the target UE is higher than a third signal quality threshold;
the signal quality of the non-serving cell reported by the target UE is higher than that of a serving cell reported by the target UE, and a difference therebetween is greater than a signal quality difference threshold;
at least one cell serving the target UE determines that an uplink signal quality of the target UE is lower than a fourth signal quality threshold, or at least one TRP serving the target UE determines that the uplink signal quality of the target UE is lower than the fourth signal quality threshold;
at least one cell serving the target UE determines that the uplink signal quality of the target UE is higher than a fifth signal quality threshold, or at least one TRP serving the target UE determines that the uplink signal quality of the target UE is higher than the fifth signal quality threshold; or
a link abnormality occurs between the target UE and at least one cell serving the target UE, or a link abnormality occurs between the target UE and at least one TRP serving the target UE.

44. The target device according to claim 41, wherein the sensing result request message comprises at least one of:
a first UE identity of the target UE;
an identity type of the first UE identity;
a requested sensing result type list; or
a requested sensing result response time range.

45. The target device according to claim 44, wherein the sensing result response message comprises at least one of:
a second UE identity of the target UE;
an identity type of the second UE identity;
the sensing result of the target UE corresponding to a sensing result type in the sensing result type list; or
a timestamp.

46. The target device according to claim 45, wherein the first UE identity is a UE identity used in a communication system, or the first UE identity is a UE identity used in a sensing system;
the second UE identity is a UE identity used in the communication system, or the second UE identity is a UE identity used in the sensing system.

47. A processor-readable storage medium storing a program for causing a processor to perform the method according to any one of claims 1 to 10.

48. A processor-readable storage medium storing a program for causing a processor to perform the method according to any one of claims 11 to 22.
